# EUROPEAN PATENT APPLICATION

(11) **EP 1 992 522 A1**
(43) Date of publication of application: **19.11.2008**
(21) Application number: 08103942.2
(22) Date of filing: 14.05.2008
(51) Int. Cl.: B60P 3/38, B60P 3/36, A47C 19/20, B61D 1/02, B61D 1/08, E06C 1/00

(54) **Improvements in accessing an upper bed**

(30) Priority: 15.05.2007 GB 0709335; 19.03.2008 GB 0805087
(71) Applicant: Edwards, John Anthony, Bridlington, East Yorkshire YO16 4HJ (GB)
(72) Inventor: Edwards, John Anthony, Bridlington, East Yorkshire YO16 4HJ (GB)

(57) **Abstract**

An upper horizontal surface **9, 10, 11,** comprising an access-ladder **7** with step-landing-platform **52,** the upper horizontal surface **9, 10, 11,** defining at least one surface for use as any or all, a surface for sleeping on, a surface for sitting on, a surface for leaning on, wherein at least part of either or both the access-ladder **7** and the step-landing-platform **52,** is positioned on or adjacent the upper horizontal surface **9, 10, 11,** and the step-landing platform **52** facilitates access between the access-ladder 7 and the upper horizontal surface **9, 10, 11.** The invention relates to improvements in accessing at least one upper bed for either or both domestic and commercial use within a room of a building, or within a passenger space; said passenger space defining a passenger cabin, either motorised or towable, and comprising any of, a motorised caravan, a trailer, a trailer caravan, a fifth-wheel trailer, a fifth-wheel trailer caravan, a boat, a ship, a bus, a coach, an aircraft, and a railway carriage.

## Description

### TECHNICAL FIELD OF INVENTION.

improvements in accessing at least one upper bed for either or both domestic and commercial use within a room of a building, or within a passenger space; said passenger space defining a passenger cabin, either motorised or towable, and comprising any of, a motorised caravan, a trailer, a trailer caravan, a fifth-wheel trailer, a fifth-wheel trailer caravan, a boat, a ship, a bus, a coach, an aircraft, a railway carriage.

### BACKGROUND OF INVENTION. Perceiving and identifying the cause and real nature of the problem, a problem & solution approach.

End users, and more particularly the elderly and infirm, have difficulty moving between a passenger cabin and the horizontal-surface of an upper-bunk-bed. Currently, a simple movable or portable access-ladder is provided, comprising two side members connected by parallel rungs. It is particularly difficult moving between the access-ladder and the horizontal-surface of the upper-bunk-bed. The end user has to move from a vertical position, standing on a rung of the access-ladder, to a horizontal position, reclining on the surface of the upper-bunk-bed. This is not an easy manoeuvre, even for a physically fit and ambulant person. Although there is usually a hook-over fitment on top of the access-ladder, the access-ladder tends to wobble, because the end user's centre of gravity tends to move outside the base of the access-ladder during the transition between the access-ladder and the upper-bunk-bed. However, even if the access-ladder didn't wobble, the transition between access-ladder and upper-bunk-bed is physiologically demanding, and extremely difficult, if not impossible for most elderly and infirm passengers. The elderly, because of their circumstances and ownership of disposable income, tend to comprise the majority of leisure vehicle users. So their needs are important, and must be addressed.

With regard to movable or portable access-ladders, prior art has focused on various means of storage, fixing and deployment. For example, see Knaus DE20300691-U1; Rossman GB254312 & 243005; Invastesa EP0212492; Kubesch DE20219175U1; Iveco EP1749965; Hymer EP1842720; Hymer EP1842721. The real nature of the problem relating to access between the passenger cabin and the surface of an upper-bunk-bed has not been identified, and therefore no solution has been invented. Significantly, the invention herein described is the product of innovation, where inventive step lies, in part, with the identification of the true nature of the problem, namely, how does an elderly and probably infirm passenger access between the vertical standing position inside a passenger cabin and a fully reclined position on the surface of a bed, in relative ease and safety, and do this particularly within the confines of a passenger cabin where space is at a premium.

Passenger cabin engineers have circumvented the issue by adding another low-level bunk-bed in the rear of the passenger cabin, and assigned the elderly and infirm user to this. Most domestic household beds are of the low level type, and this design has been adopted for the elderly. This is an obvious solution for skilled persons in the art. Any retained upper-bunk-bed has been re-assigned for use by more agile passengers such as young children or grand-children, who can be physically assisted by adults to move between the access-ladder and the horizontal-surface of the upper bunk-bed in relative safety.

Passenger cabins in general, and particularly motorhomes and caravans, are designed to utilize space economically, because space is very limited. Both fuel costs and parking issues influence the minimum weight & minimum space approach to motorhome and caravan design. Simply introducing another bed that requires additional floor space and abandoning the upper-bunk-bed for occasional use by younger and more ambulant passengers and visitors does not identify the real nature of the problem, and therefore does not address the problem. It merely sets the problem to one side. Ideally, for the best utilization of space, it is better to leave the bunk-bed in the upper position, and identify and address the cause of the problem, and thereby retain the economy of space utilization. There are several issues associated with the cause of the problem.

One issue associated with the cause of the problem is that of the physiological difficulty relating to movement between the vertical standing position on the rung of an access-ladder and the horizontal reclined position on the surface of a bunk-bed. That is, the transition between these two members and between these two physiological positions. This is a serious problem, even if there were only one passenger using the upper-bunk-bed.

A further issue associated with the cause of the problem is that of sleeping postures or sleeping profiles relating to end users. In current designs, end users sleep across the passenger cabin, with their heads toward one side and their feet toward the opposite side, in relation to the passenger cabin when viewed in plan view. When the person on the 'inside' wishes to move between the upper-bunk-bed and the access-ladder, they must first clamber over the person on the 'outside', that is, the person nearest the access-ladder. This not only disturbs the passenger on the 'outside', but makes even more difficult the task of moving between upper-bunk-bed and access-ladder.

Many bunk-beds, particularly in motorhomes, are positioned above the driver, in an over-cab compartment. So a further issue associated with the cause of the problem relates to aerodynamics. Fuel costs are rising, so the more aerodynamic the front roof of the motorhome over cab compartment or a caravan, the greater will be the miles per gallon obtained on journey.

So the cause of the difficulty is primarily related to the absence of creative perception in identifying the real nature of the problem. Secondly, the cause of the difficulty is also related to the subjects of aerodynamics, physiology and technical design engineering. Inventive step was required to identify the real nature of the problem, and then inventive step was further required to address the problem in a creative way, perceiving how these variables could be integrated and related in a way that would result in an innovative solution.

A number of related embodiments have been invented. The first solution was designed to fit existing floor plans and upper-bunk-bed designs. This is useful, since the design can be immediately sold to passenger cabin manufactures without the need to develop new floor plans, which is costly and time consuming.

Also, this design can be sold to existing passenger cabin end users, thereby providing a wide market for sales. This first solution comprises various embodiments of access-step with step-landing-platform.

A first working solution provides a partial answer to the cause of the problem, and is an improvement over prior art. The access-ladder with step-landing-platform provides the end user with the facility to turn and sit or to turn and kneel upon the surface of the upper-bunk-bed before moving to the recline position. In the reverse direction, the access-ladder with step-landing-platform provides the end user with the facility to move from the recline position to the sitting position on the upper horizontal surface of the bunk-bed, before turning their feet and manoeuvring their body on the step-landing-platform to orient themselves for moving to a standing position on the access-ladder. This is physiologically easier than that provided by prior art. Usefully, the surface for standing on of the step-landing-platform deployed for standing on, is positioned below the surface for sleeping on of the upper-bunk-bed deployed for sleeping on. Conveniently, the distance between the surface for sleeping on of the bunk-bed and the surface for standing on of the step-landing-platform is the same or similar to the distance between the surface for sitting on of a dining-chair seat and the floor. Beneficially, this distance between the surface for sleeping on of the bunk-bed and the surface for standing on of the step-landing-platform will vary according to precise function and application. Advantageously, there may be applications where the surface for standing on of the step-landing-platform is either level or higher than the surface for sleeping on of the bunk-bed.

Prior art requires that an end user move directly from the standing position on the access-ladder to the reclined position on the upper-horizontal-surface of the bunk-bed. This is a very awkward manoeuvre, especially for an older passenger. The access-ladder with step-landing-platform provides an intermediate physiological position and respite. The end user can rest in the seated position and think through the next manoeuvre. So the transition between the access-ladder and the upper-horizontal-surface of the bunk-bed has been improved over prior art.

A second working solution is better than the first working solution, since it provides greater physiological support for the end user when moving between the passenger cabin and the bunk-bed, and particularly when moving between the access-ladder and the surface of the bunk-bed, by the provision of a hand holding facility. At least one access-recess is provided in any or all, the upper-horizontal surface of a bunk bed, or between two parts of the upper-horizontal-surface of a bunk bed, or between at least two separate bunk bed upper-horizontal-surfaces.

The access-ladder with step-landing-platform is positioned within or adjacent this access-recess. So the top surface of the bed adjacent the access-recess provides hand and arm support, especially during the difficult manoeuvre between access-ladder & upper-horizontal-surface. Additionally, it allows end users to move between the access-ladder and the surface of the bunk-bed without clambering over another passenger, since each passenger sleeps, one on each side of the access-recess. Each passenger can move between their bunk-bed and the step-landing-platform without disturbing or only minimally disturbing the other passenger. This second working solution also identifies & addresses the problem relating to aerodynamics. Passengers have the option to sleep with their head toward the rear, and their feet toward the front. So the front end of the passenger cabin can be a low profile aerodynamic shape when viewed in side elevation view.

A barrier is provided to prevent passengers from unintentionally falling from the surface of the upper bunk-bed to the floor of the passenger cabin. Said barrier has been creatively designed to interlock with a movable upper-horizontal-surface of the bunk-bed, so that the barrier has to be lowered before the upper-horizontal-surface can be raised, thereby preventing a barrier member, unintentionally left in the raised position, from striking the inner surface of the passenger cabin roof when the horizontal surface of the bunk-bed is moved to the raised position. This second working solution is particularly suitable for Class 'C' type motorhomes with an alcove, which have an over-cab upper-bunk bed.

A third working solution is similar to the second working solution, except that it is provided for Class 'A' integrated motorhomes, semi-integrated motorhomes and caravans. This third working solution usually comprises a single upper-horizontal-surface with two longitudinal sleeping positions, one each side of an access-recess. An access-ladder with step-landing-platform is positioned on or adjacent said access-recess.

Moreover, when the upper-horizontal-surface is not being used as a sleeping surface or a sitting surface, it is often used for storing cargo or for other support functions. This is especially true when the passenger cabin is in the travelling mode. The provision of a step-landing-platform provides a surface for standing on to facilitate the movement of items such as cargo between the upper-horizontal-surface and the passenger cabin.

Whilst other prior art upper beds are provided with access ladders which include a hook fixed to the access-ladder and a 'U' shaped bracket fixed to the upper bed, there is a tendency for the access-ladder to wobble in use. The tendency of the access-ladder to wobble in use is more severe if the centre of gravity of the person using the access-ladder moves outside the base area of the access-ladder. The tendency of the access-ladder to wobble in use is caused by a dimensionally loose fit in the joint between the hook and the 'U' shaped bracket.

To address this issue, also provided and described is an optional safety arrangement, said safety arrangement being adapted to minimise the risk of injuries occurring to a person whilst using the access-ladder. The safety arrangement defines a retaining element comprising a hook and a 'U' shaped bracket, and includes a resilient means for applying spring bias to reduce or tend to reduce the dimensional tolerance between the access-ladder and the upper bed.

### SUMMARY OF INVENTION

According to this invention, there is provided an upper horizontal surface comprising an access-ladder with step-landing-platform, the upper horizontal surface defining at least one surface for use as any or all, a surface for sleeping on, a surface for laying on, a surface for sitting on, wherein at least part of either or both the access-ladder and the step-landing-platform is positioned on or adjacent the upper horizontal surface, and the step-landing platform facilitates access between the access-ladder and the upper horizontal surface.

Beneficially, the upper horizontal surface is positioned within a passenger-space, the passenger space defining a motorised or towable passenger cabin, said passenger cabin comprising any of, a motorised caravan, a trailer, a trailer caravan, a fifth-wheel trailer, a fifth-wheel trailer caravan, a boat, a ship, a bus, a coach, an aircraft, a railway carriage.

Conveniently, said access-ladder with step-landing-platform comprises integrated access-ladder and step-landing-platform.

Usefully, the step-landing-platform is any of, fixed by means, movably fixed by means, detachably fixed by means on or adjacent either or both the access-ladder and the upper-horizontal-surface.

Advantageously, the access-ladder is any of, fixed by means, movably fixed by means, detachably fixed by means on or adjacent either or both the step-landing-platform and the upper-horizontal-surface.

Beneficially, there is provided at least one access-recess either or both within and between all or any said upper-horizontal-surface, and at least part of either or both said access-ladder and said step-landing-platform is positioned on or adjacent said access-recess to facilitate access between any or all said upper-horizontal-surface, said step-landing-platform, and said access-ladder.

Conveniently, at least part of all or any said upper-horizontal-surface is movable between a retracted first position for storage and a deployed second position for said use.

Beneficially, either or both said step-landing-platform and said access-ladder is movable between a first retracted position for storage and a second deployed position for standing on which facilitates access between any or all said upper-horizontal-surface, said step-landing-platform and said access-ladder.

Usefully, there is provided either or both footstep means and handrail means positioned between said upper-horizontal-surface and said step-landing-platform to facilitate access between any or all said upper-horizontal-surface, said step-landing-platform, and said access-ladder.

Advantageously, there is a plurality of either or both said footstep means and said handrail means.

Conveniently, there is provided either or both banister support means and surface support means adjacent either or both said step-landing-platform and said access-recess to facilitate access between any or all said upper-horizontal-surface, said step-landing-platform, and said access-ladder.

Advantageously, at least part of all or any said upper-horizontal-surface is movable about any of, a fixed axis means, a movable axis means, a detachable axis means between said retracted first position for storage and said deployed second position for use.

Beneficially, said axis means is either or between substantially parallel and substantially diagonal in relation to the longitudinal axis of said passenger cabin when viewed in plan view.

Usefully, said axis means is substantially perpendicular in relation to the longitudinal axis of said passenger cabin when viewed in plan view.

Beneficially, said axis means comprises any axis which facilitates a pivoting action.

Usefully, the upper horizontal surface is provided with barrier safety arrangement means movable between a deployed first position which inhibits unintentional access between the upper-horizontal-surface and either or both said step-landing-platform or said access-ladder and a stored second position which facilitates access between any or all said upper-horizontal-surface, said step-landing-platform, and said access-ladder.

Conveniently, the upper horizontal surface is provided with barrier safety arrangement means which inhibit unintentional access between the upper-horizontal-surface and either or both said step-landing-platform or said access-ladder.

Beneficially, the step-landing-platform comprises at least one platform of any size, shape, profile and area that will facilitate movement between said upper-horizontal-surface and said access-ladder.

Usefully, said step-landing-platform supports at least part of a foot in a direction which is in addition to that, or other than that, where the longitudinal axis between big toe and heel is substantially parallel to the direction of movement between either or both the upper horizontal surface and said step-landing-platform or between said step-landing-platform and said access-ladder.

Advantageously, there is provided a retaining element which any of, fixes, movably fixes, or detachably fixes either or both the access-ladder and the step-landing-platform on or adjacent the upper-horizontal-surface, said retaining element including at least one resilient means, said resilient means applying spring bias by any of, compression means, tension means and torsion means to reduce or tend to reduce all or any, movement, wobble, vibration and dimensional tolerance between said upper-horizontal-surface, and either or both said step-landing-platform, said access-ladder.

Usefully, said retaining element is provided with at least two grooved surfaces that mesh together in use to reduce or tend to reduce any or all movement, wobble, vibration and dimensional tolerance between said ladder and said support means. Advantageously, at least one said grooved surface comprises at least part of said resilient means.

Usefully, said step-landing-platform is movable about at least one axis means.

Beneficially, said axis means comprises any axis which facilitates a pivoting action.

Conveniently, said step-landing-platform is supported in either or both said stored first position and said deployed second position by means of at least one gas spring.

Beneficially, either or both said footstep means and said handrail means comprise ladder-rungs.

Conveniently, said step-landing-platform is provided with a non-slip surface overlay.

Usefully, said non-slip surface overlay includes either or both a printed image or an integral image.

Advantageously, said image is a logo.

Usefully, said image is a picture.

Advantageously, said step-landing-platform provides access for different sleeping postures on all or any said upper-horizontal-surface.

Beneficially, the profile of at least one said different sleeping posture is either or between substantially parallel and substantially diagonal in relation to said longitudinal axis of said passenger cabin when viewed in plan view.

Conveniently, said profile places feet substantially toward the front and head substantially toward the rear in relation to said passenger cabin when viewed in plan view.

Usefully, said support means comprises any or all hand support means, arm support means, foot support means, leg support means, knee support means and body support means.

Beneficially, said barrier safety arrangement means is manually movable between said first position and said second position.

Conveniently, said barrier safety arrangement means is provided with latch means to detachably fix said barrier means in said first position.

### DESCRIPTION OF THE DRAWINGS

In order that the invention may be more readily understood, and so that further features thereof may be appreciated, the invention will now be described, by way of example, with reference to the accompanying drawings in which:
Figures 1 and 2 are schematic top plan views showing the upper-horizontal-surface and the step-landing-platform in deployed positions.
Figures 3 through 8 are schematic perspective views showing a passenger or driver moving between the upper-horizontal-surface and the cab or main body via the step-landing-platform and access-ladder.
Figures 9 through 11 show two schematic side views and one schematic top plan view of a motorised (partially integrated design) caravan with the upper-horizontal-surface and step-landing-platform in both the upper stored position and the lower deployed position.
Figures 12 through 14 show two schematic side views and one schematic top plan view of a motorised (fully integrated design) caravan with the upper-horizontal-surface and step-landing-platform in both the upper stored position and the lower deployed position.
Figure 15 and figure 16 show two detail perspective views of the upper-horizontal-surface, with a fixed safety barrier, and step-landing-platform in deployed positions.
Figure 17 and figure 18 show two detail perspective views of the upper-horizontal-surface with a moveable barrier means, wherein the movable barrier means is shown in a lower stored position, and the step-landing-platform is shown in a deployed position.
Figure 19 and figure 20 show two detail perspective views of the upper-horizontal-surface with a movable barrier means, wherein the movable barrier means is shown in an upper deployed position, and the step-landing-platform is shown in a deployed position.
Figures 21 through 24 show four detail schematic side views of a movable step-landing-platform, illustrating its movement between a lower deployed position (figure 21) and an upper stored position (figure 24).
Figure 25 and figure 26 show schematic side views of two motorised (alcove design) caravans, one featuring a single cab design (figure 25) and the other featuring a double cab design (figure 26).
Figure 27 is a first detail isometric cross sectional view showing a fixed upper-horizontal-surface, and a fixed or movable step-landing-platform, with either or both footstep means and handrail means.
Figure 28 is a second detail isometric cross sectional view showing both fixed and movable upper-horizontal-surfaces and step-landing-platform in lower deployed positions.
Figure 29 is a third detail isometric cross sectional view showing movable upper-horizontal-surfaces and access-ladder in upper stored positions.
Figure 30 is a fourth detail isometric cross sectional view showing two separate and movable upper-horizontal-surfaces and step-landing-platform in lower deployed positions.
Figure 31 is a fifth detail isometric cross sectional view showing two separate and movable upper-horizontal-surfaces in an upper stored position.
Figure 32 is a sixth detail isometric cross sectional view showing movable upper-horizontal-surfaces in a lower deployed position, the step-landing-platform in a lower deployed position, and safety barrier means in an upper deployed position.
Figure 33 through 35 are seventh, eighth and ninth detail isometric cross sectional views showing movable upper-horizontal-surfaces in a lower deployed position, the step-landing-platform in a lower deployed position, and part of safety barrier means in an upper deployed position and part of safety barrier means midway between an upper deployed position and a lower stored position.

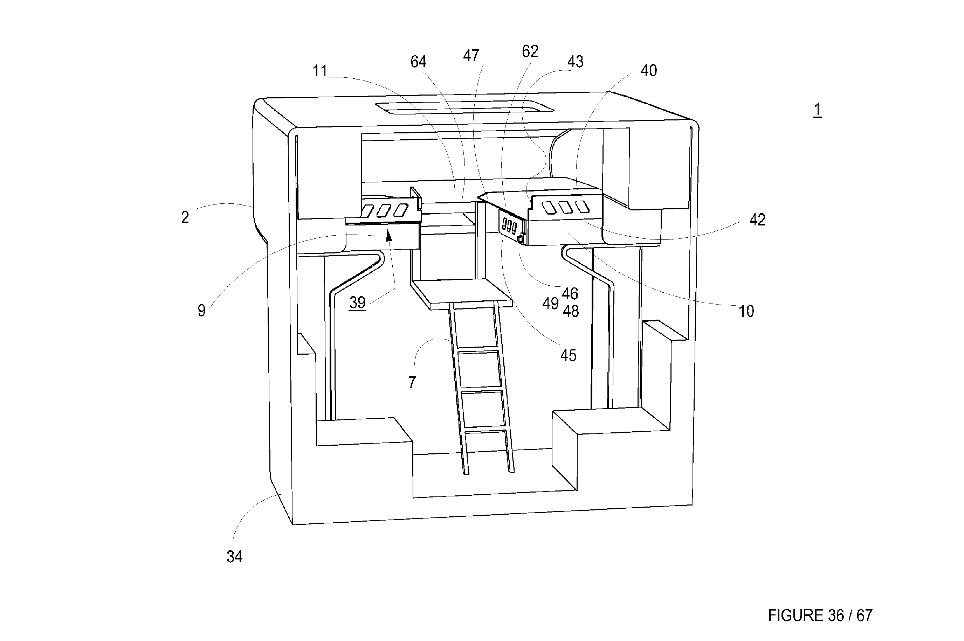

Figure 36 is a tenth detail isometric cross sectional view showing movable upper-horizontal-surfaces in a lower deployed position, the step-landing-platform in a lower deployed position, and part of safety barrier means in an upper deployed position and part of safety barrier means in a lower stored position.
Figure 37 is a eleventh detail isometric cross sectional view showing movable upper-horizontal-surfaces in a lower deployed position, and the safety barrier means in a lower stored position.
Figure 38 is an twelfth detail isometric cross sectional view showing movable upper-horizontal-surfaces in an upper stored position, and the safety barrier means in a lower stored position.
Figure 39 is a thirteenth detail isometric cross sectional view showing part of movable upper-horizontal-surfaces in an upper stored position with corresponding safety barrier means in a lower stored position and part of movable upper-horizontal-surfaces in a lower deployed position with corresponding safety barrier means in an upper deployed position, and step-landing-platform in an upper stored position.
Figure 40 is a fourteenth detail isometric cross sectional view showing part of movable upper-horizontal-surfaces in an upper stored position with corresponding safety barrier means in a lower stored position and part of movable upper-horizontal-surfaces in a lower deployed position with corresponding safety barrier means in an upper deployed position, and step-landing-platform in a lower deployed position.
Figure 41 is a fifteenth detail isometric cross sectional view showing part of movable upper-horizontal-surface in a lower deployed position, and part of barrier safety means in a lower stored position and part of barrier safety means in a lower deployed position.
Figure 42 and figure 43 are schematic end elevation views showing a movable upper-horizontal-surface mechanically linked to part of barrier safety means. Figure 42 shows the upper-horizontal-surface and part of barrier safety means in an upper stored position. Figure 43 shows the upper-horizontal-surface and part of barrier safety means in a lower deployed position.

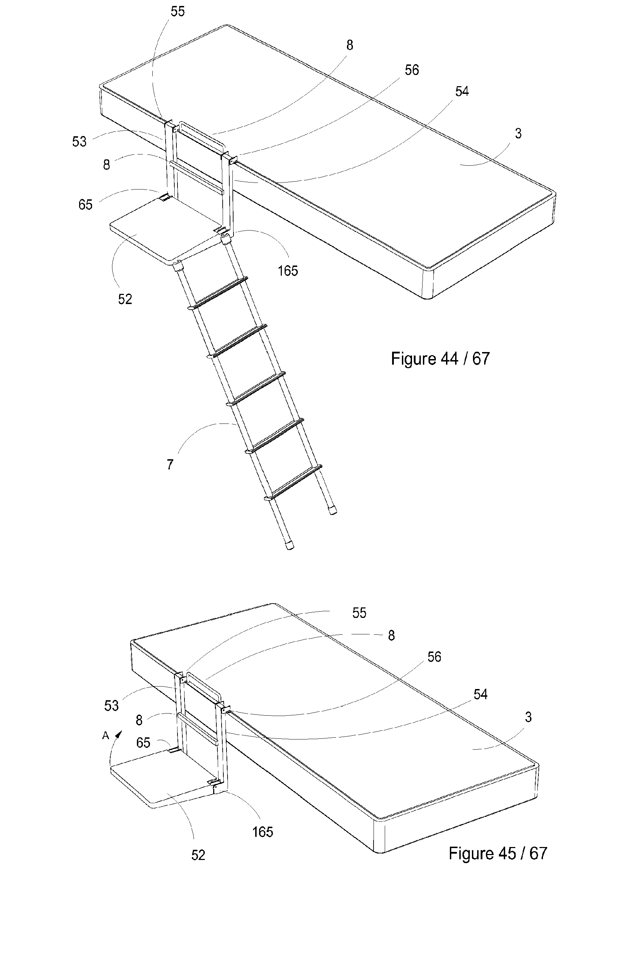

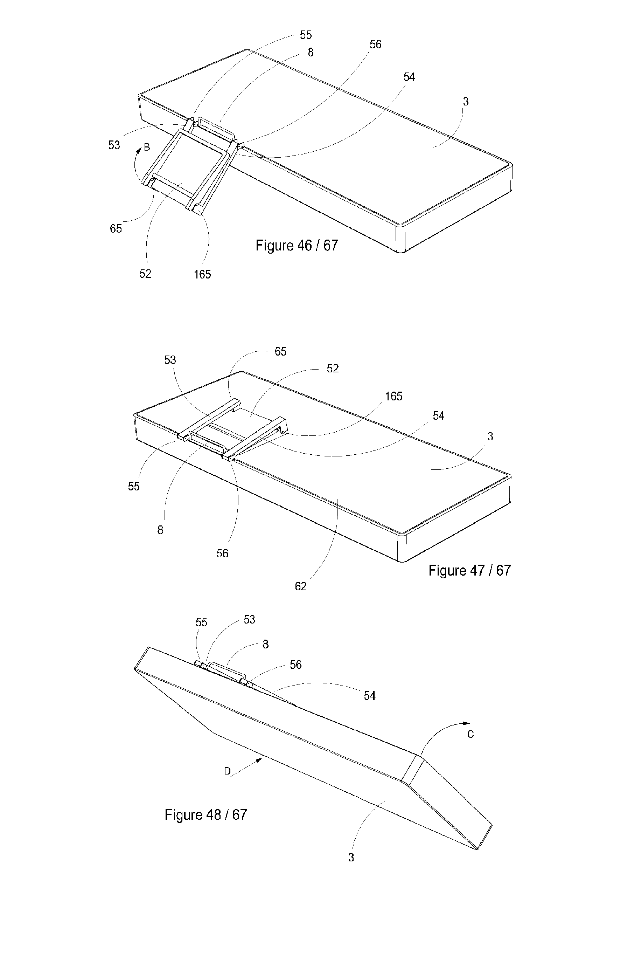

Figure 44 through to figure 48 are detail isometric views of an upper-horizontal-surface, without an access-recess, to which has been fixed a fold-up step-landing-platform. Figure 44 shows the step-landing-platform deployed, with an access-ladder attached to one side. Figure 45 shows the step-landing-platform deployed, with the access-ladder removed to storage. Figure 46 shows the step-landing-platform mid-way between a deployed position and a stored position. Figure 47 shows the step-landing-platform in the stored position. Figure 48 shows the upper-horizontal-surface mid-way between a deployed position and a stored position.
Figure 49 and figure 50 are detail isometric views of an integrated access-ladder, step-landing-platform with either or both hand-rail means and foot-step means.
Figure 51 through to figure 53 are detail isometric views of an integrated access-ladder and folding step-landing-platform and hand-rail means.
Figure 54 and figure 55 are detail isometric views of an integrated access-ladder and folding step-landing-platform and hand-rail, wherein the step-landing-platform is provided with a non-slip surface.
Figure 56 is a detailed isometric view of an access-ladder adjacent both an upper-horizontal-surface and a step-landing-platform.
Figure 57 is a detail side elevation view and figure 58 is a detail isometric view showing an access-ladder positioned adjacent an upper-horizontal-surface with the hook means of the retaining element and 'U' shaped bracket means of the retaining element shown apart.
Figure 59 through to figure 61 show detail section views of the retaining element, with the hook means of the retaining element and the 'U' shaped bracket means of the retaining element shown in the inserted position.
Figure 62 is a detail isometric view and figure 63 through to figure 65 are detail section views of the retaining element, with the hook means of the retaining element and the 'U' shaped bracket means of the retaining element shown in the clamped position.
Figure 66 and figure 67 show an exploded isometric view of the 'U' shaped bracket means of the retaining element.

### DETAILED DESCRIPTION OF THE INVENTION.

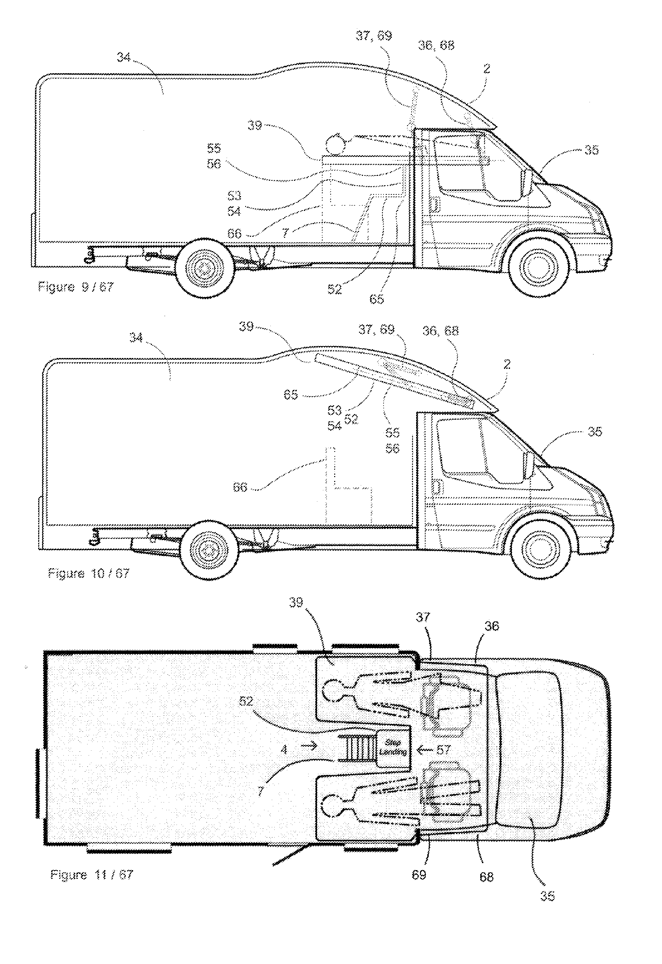

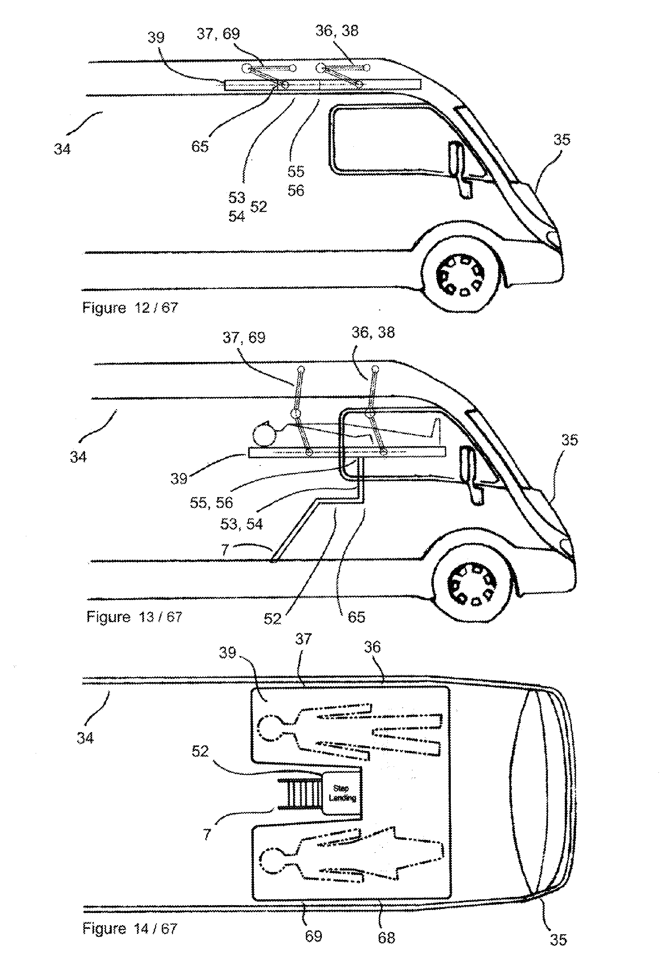

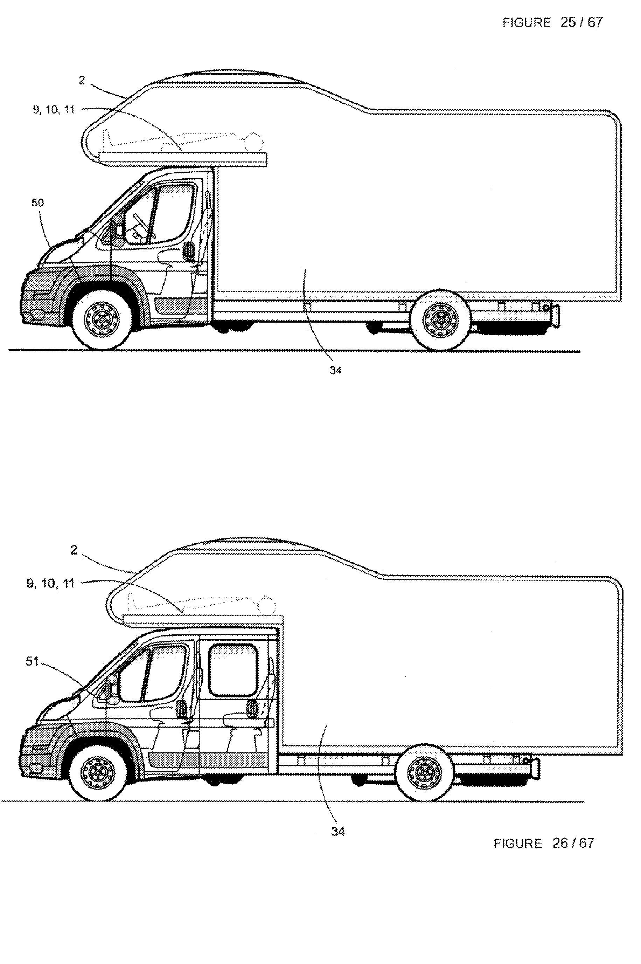

**Referring to** **figures 9 through 14**, **and** **25 and 26** of the accompanying drawings. The invention relating to improved passenger cabin upper-bunk-bed access can be used and applied in any type of passenger cabin, motorised or towable. For example, figures 9 through 11 show an application for a partially integrated motorised caravan. Figures 12 through 14 show an application for a fully integrated motorised caravan or towable caravan. Figures 25 and 26 show an application for an alcove design of motorised caravan, where there is an over cab bunk-bed compartment.

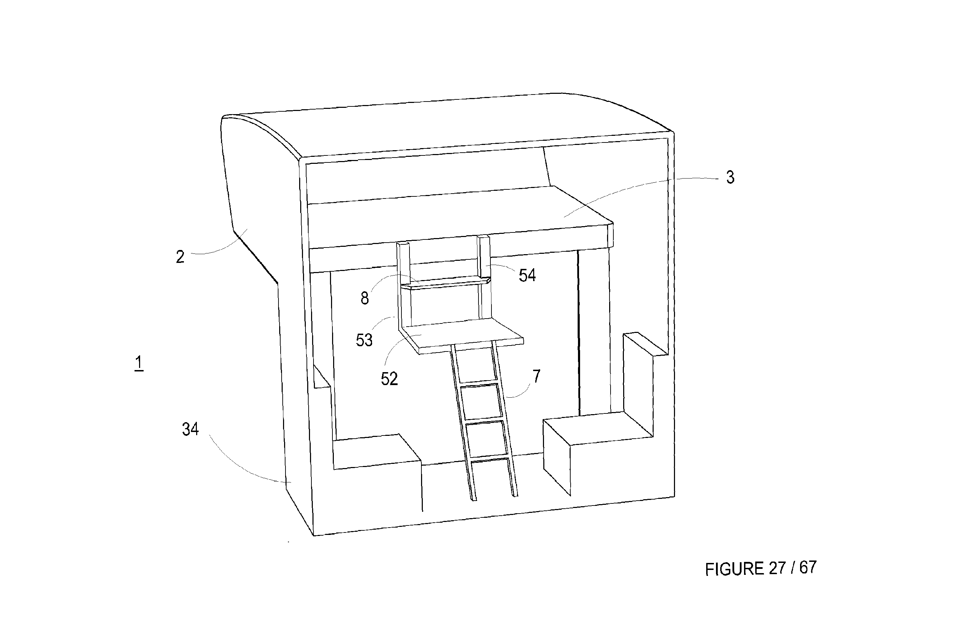

**Referring to** **figure 27** of the accompanying drawings. In a first embodiment of the present invention there is provided an upper-horizontal-surface 3, defining a surface as any or all, a surface for sleeping on, a surface for sitting on, storage means and support means. There is also provided step-landing-platform 52 fixed by means to step-landing-support-members **53, 54.** Step-landing-support-members **53, 54** are fixed by means to upper-horizontal-surface **3.**

Step-landing-platform 52 defining all or any, access surface means, support surface means, manoeuvring surface means, and storage surface means. Also provided are either or both footstep means and handrail means **8,** and access-ladder **7.** Either or both footstep means and handrail means **8** are fixed by means to step-landing-support-members **53, 54.** Access-ladder **7** is fixed by means to step-landing-platform **52.**

Usefully, step-landing-platform **52** facilitates access between upper-horizontal-surface **3** and either or both cab area **35** (not shown) and main body **34,** by enabling a driver or passenger to turn and manoeuvre, thereby facilitating a useful physiological relationship or orientation between the driver or passenger and upper-horizontal-surface **3** for a selected sleeping posture or sleeping profile. This is especially useful where the driver or passenger is less ambulant or semi-ambulant as a result of either or both age and illness. Similarly beneficial, either or both footstep means and handrail means **8** provide at least one intermediate support means when moving between step-landing-platform **52** and upper-horizontal-surface **3,** thereby facilitating access between any or all upper-horizontal-surface **3,** step-landing-platform **52,** access-ladder **7** and passenger cabin generally designated **1.**

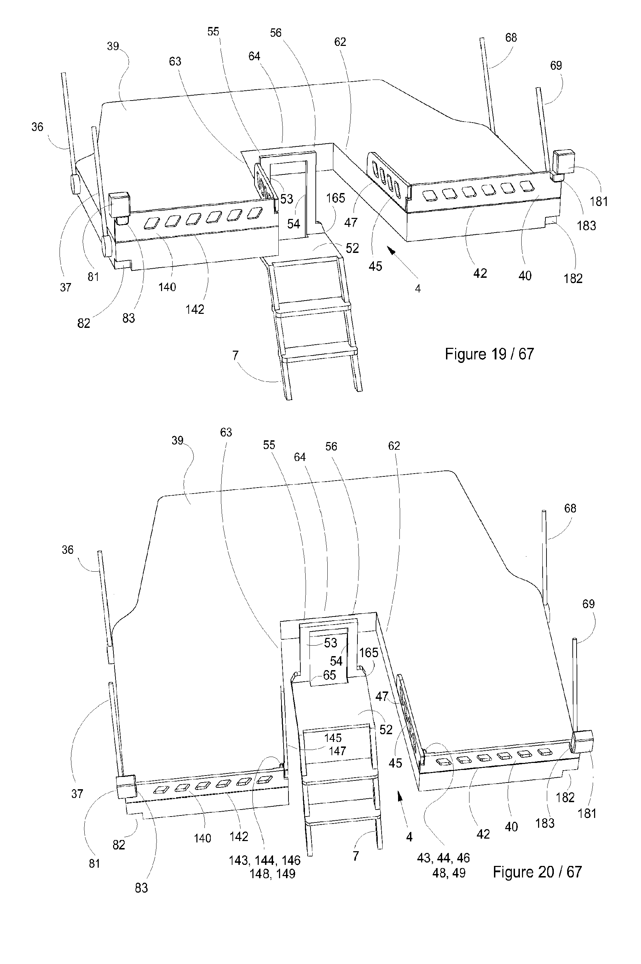

**Referring to** **figures 9 through 20** of the accompanying drawings. In a further embodiment of the present invention there is shown movable upper-horizontal-surface **39** in a retracted position for storage, see figures 10 and 12. There is also shown upper-horizontal-surface **39** in a deployed position for sleeping on, see figures 9, 11, and 13 through 20. Advantageously, upper-horizontal-surface **39** moves between an upper retracted position for storage and a lower deployed position for sleeping on by the action of standard spring balance hinge and stay means **36, 37, 68** and **69.**

Beneficially, and when viewed in plan view, upper-horizontal-surface **39** is shown with access-recess **4,** into which is positioned, or adjacent to which is positioned, step-landing-platform **52.** Advantageously, positioning step-landing-platform **52** forwardly within or adjacent access-recess **4** reduces congestion within main body **34** by providing additional unobstructed floor space. Usefully, access-recess **4** also provides support means **62, 63** and **64** to facilitate movement between any or all upper-horizontal-surface **39,** step-landing-platform **52,** access-ladder **7,** cab area **35** and main body **34.** Beneficially, support means **62, 63** and **64** comprise banister support means. Alternatively, support means **62, 63** and **64** comprise surface support means.

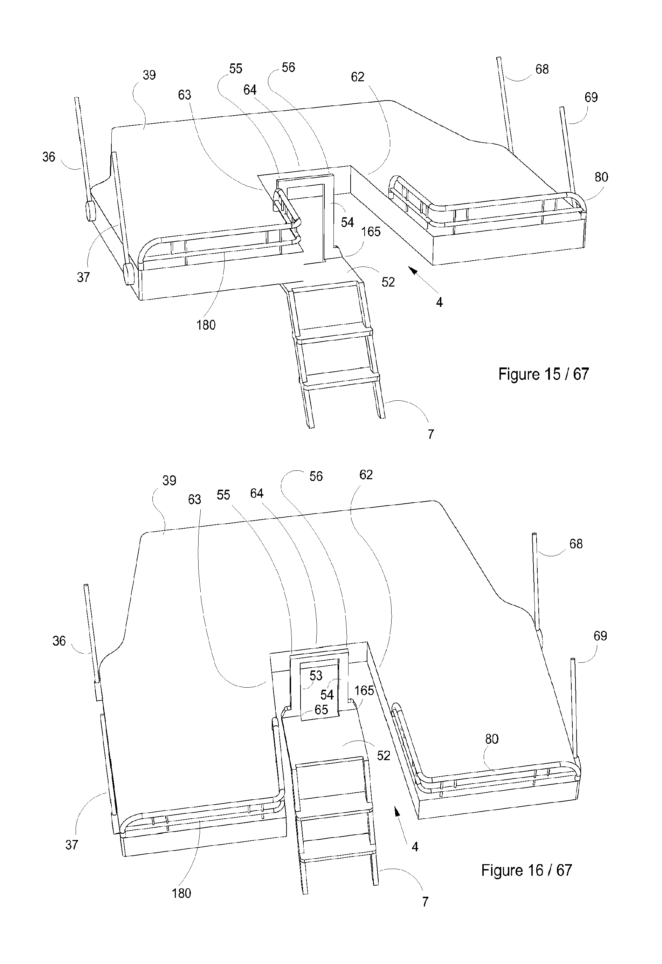

Typically there is shown fixed barrier members **80, 180** see figure 15 and figure 16. Usefully, fixed barrier members **80, 180** inhibits accidental or unintentional access from upper-horizontal-surface **39** to any or all step-landing-platform **52,** main body **34** and cab area **35.** Beneficially, fixed barrier members **80, 180** facilitates intentional access between any or all upper-horizontal-surface **39,** step-landing-platform **52,** main body **34** and cab area **35,** by providing at least hand holding support means.

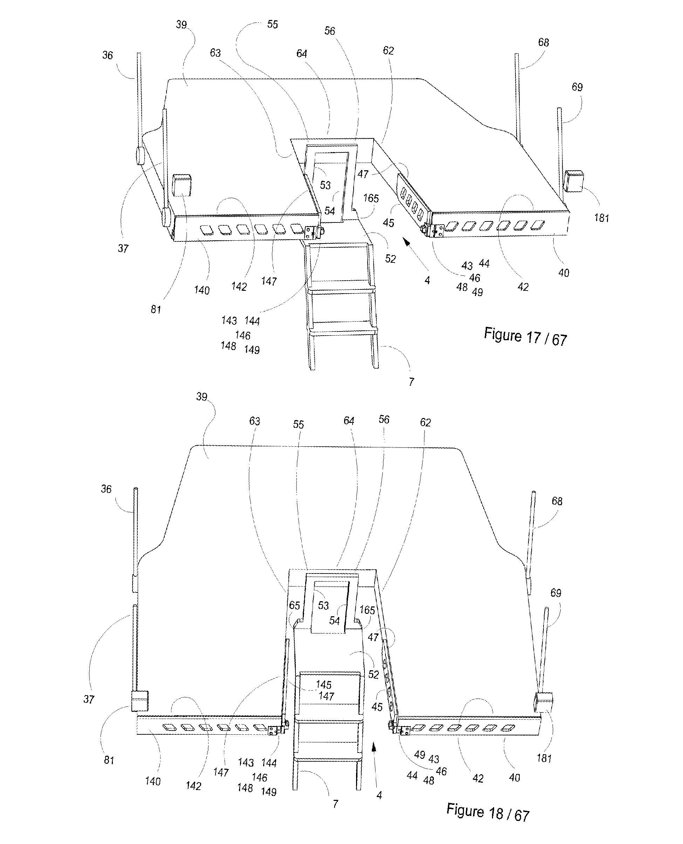

Typically, there are shown movable barrier members **40, 45, 145** and **140** movable between an upper deployed position for providing barrier means and a lower retracted position for storage, see figures 17 through 20. Advantageously, stop means **81** and **181** are fixed by means to a suitable part of main body **34.**
Usefully, as barrier member **140** moves from a lower retracted position for storage to an upper deployed position for providing barrier means, stop foot **83** on barrier member **140** moves from stop foot housing **82** to a position adjacent to stop means **81,** thereby preventing upper-horizontal-surface **39** from moving upwardly toward an upper retracted position for storage. Advantageously, this interlocking feature prevents upper-horizontal-surface **39** from moving from a lower deployed position for sleeping on to an upper retracted position for storage when barrier member **140** is in a deployed upper position for providing barrier means, thereby avoiding the possibility of barrier member **140** colliding with the ceiling inner roof surface of main body **34.**

Beneficially, and in a similar way, as barrier member **40** moves from a lower retracted position for storage to an upper deployed position for providing barrier means, stop foot **183** on barrier member **40** moves from stop foot housing **182** to a position adjacent to stop means **181,** thereby preventing upper-horizontal-surface **39** from moving upwardly toward an upper retracted position for storage. Advantageously, this interlocking feature prevents upper-horizontal-surface **39** from moving from a lower deployed position for sleeping on to an upper retracted position for storage when barrier member **40** is in a deployed upper position for providing barrier means, thereby avoiding the possibility of barrier member **40** colliding with the ceiling inner roof surface of main body **34.**

Conveniently, barrier member **140** moves about axis **142** and barrier member **40** moves about axis **42.**

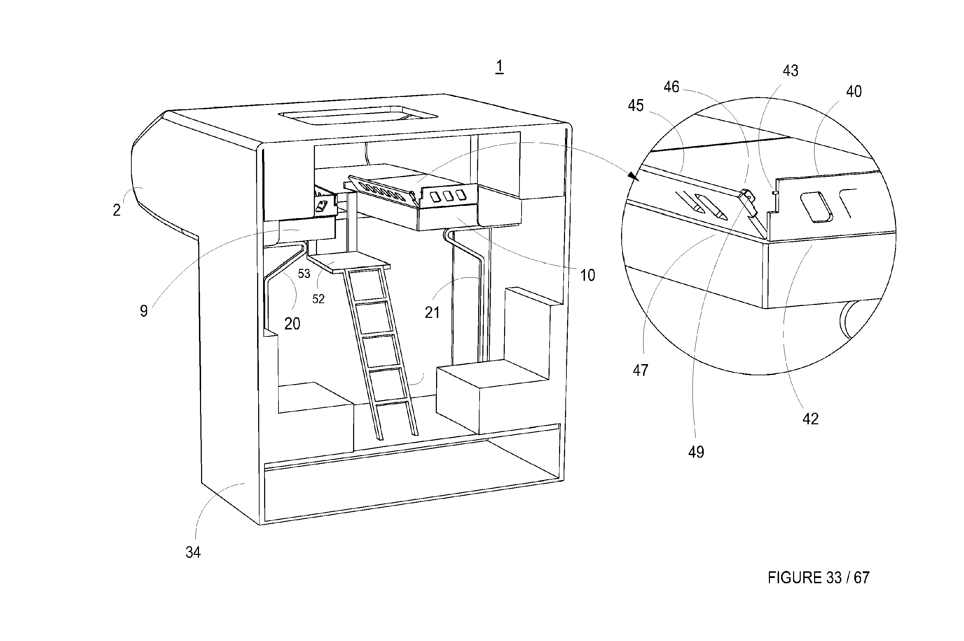

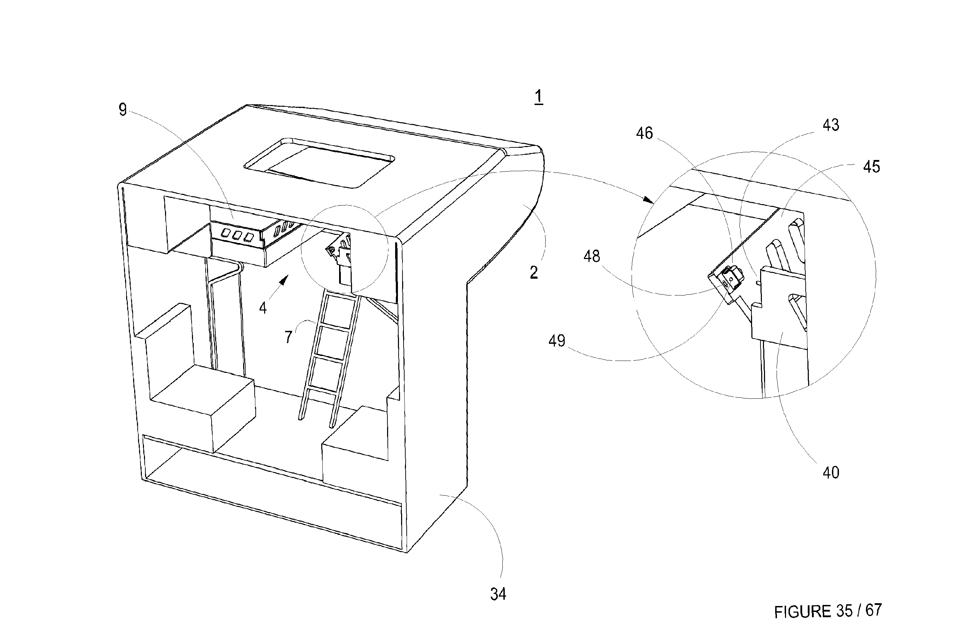

**Referring also to** **figures 33 through 35****.** Usefully, barrier member **45** moves about axis **47.** Beneficially, as barrier member **45** approaches an upper deployed position for providing barrier means, dowel-pin slot **48** engages dowel pin **43.** Conveniently, when dowel pin slot **48** engages dowel pin **43,** then barrier member **40** is prevented from moving downwardly from an upper deployed position for providing barrier means, to a lower retracted position for storage.

Beneficially, push latch means **46** is then operated by manually moving extending bolt means **49** to a latched position inside bolt slot means **44** to prevent barrier member **45** from moving from an upper deployed position for providing barrier means to a lower retracted position for storage. Advantageously, in this latched position, barrier member **40** and **45** are detachably fixed together in the upper deployed position for providing barrier means.
Conveniently, and in the reverse order, extending bolt means **49** is moved from a latched position inside bolt slot means **44** by inserting a key to release the latching mechanism inside push latch means **46.** Advantageously, said key operated latch release system reduces the possibility of unintentional operation, particularly by children. Usefully, barrier member **45** is then moved from an upper deployed position for providing barrier means to a lower retracted position for storage. Beneficially, then barrier member **40** can then be moved from an upper deployed position for providing barrier means to a lower retracted position for storage, thereby moving stop foot **183** away from stop means **181** and allowing upper-horizontal-surface **39** to move from a lower deployed position for sleeping on to an upper retracted position for storage.

Similarly, and usefully, barrier member **145** moves about axis **147.** Beneficially, as barrier member **145** approaches an upper deployed position for providing barrier means, dowel-pin slot **148** engages dowel pin **143.** Conveniently, when dowel pin slot **148** engages dowel pin **143,** then barrier member **140** is prevented from moving downwardly from an upper deployed position for providing barrier means to a lower retracted position for storage. Beneficially, push latch means **146** is then operated by manually moving extending bolt means **149** to a latched position inside bolt slot means **144** to prevent barrier member **145** from moving from an upper deployed position for providing barrier means to a lower retracted position for storage. Advantageously, in this latched position, barrier member **140** and **145** are detachably fixed together in the upper deployed position for providing barrier means.

Conveniently, and in the reverse order, extending bolt means **149** is moved from a latched position inside bolt slot means **144** by inserting a key to release the latching mechanism inside push latch means **146.** Usefully, barrier member **145** is then moved from an upper deployed position for providing barrier means to a lower retracted position for storage.

Beneficially, barrier member **140** can then be moved from an upper deployed position for providing barrier means to a lower retracted position for storage, thereby also moving stop foot **83** away from stop means **81** to allow upper-horizontal-surface **39** to move from a lower deployed position for sleeping on to an upper retracted position for storage.

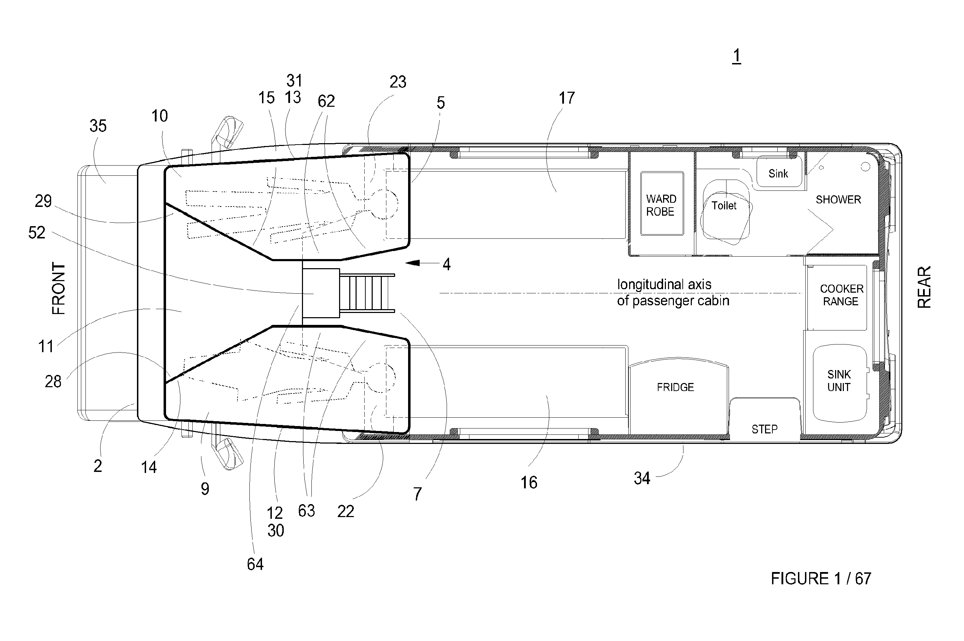

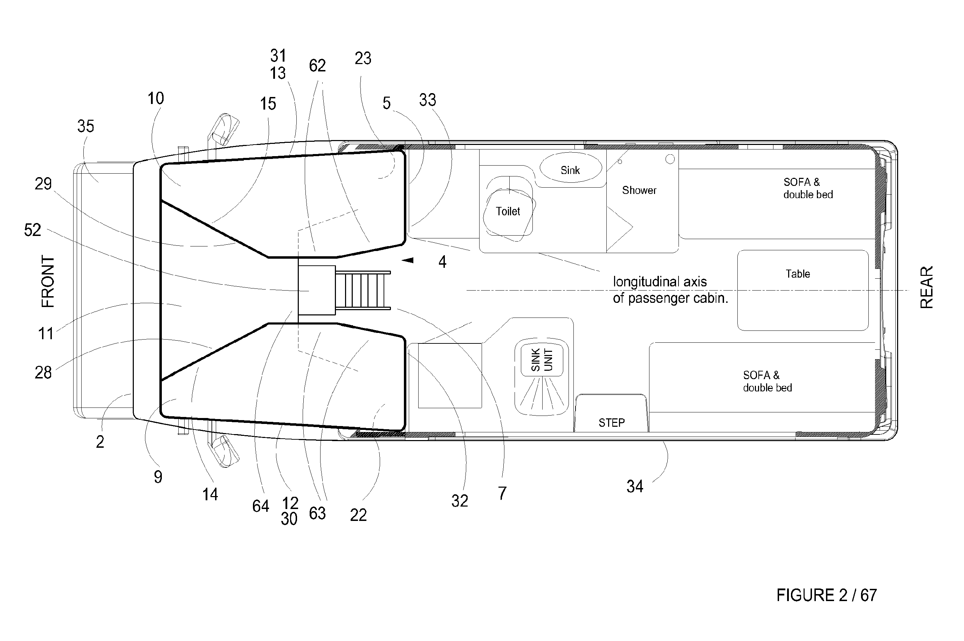

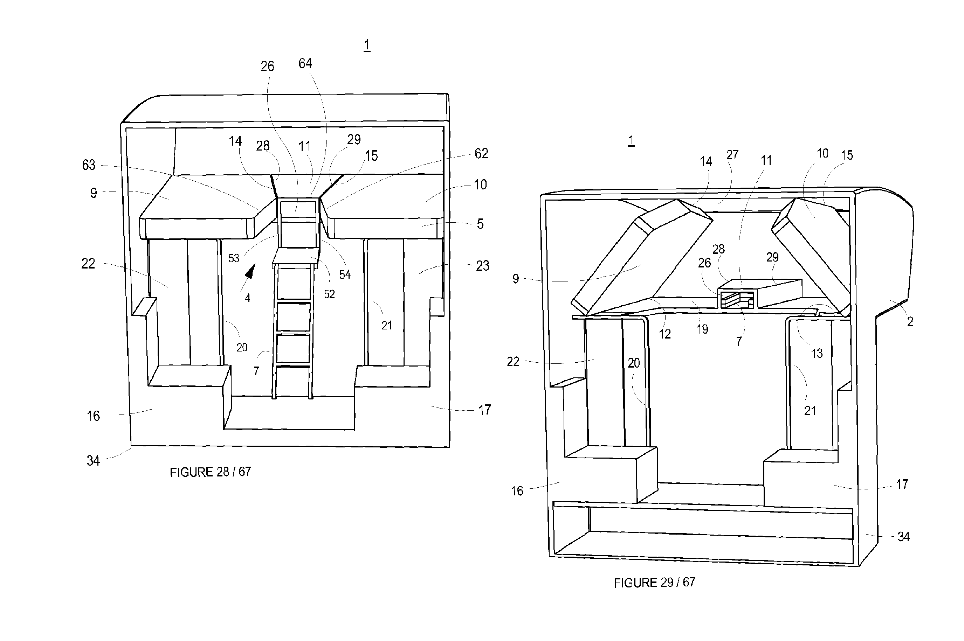

**Referring to** **figure 1** **and** **figure 2** **and to** **figures 28 and 29** of the accompanying drawings. In a further embodiment of the present invention, there is shown upper-horizontal-surfaces **9, 10** and **11,** with access-recess **4,** step-landing-platform **52** and access-ladder **7.** Also shown are support surfaces **62, 63** and **64.** Usefully, upper-horizontal-surface **9** is movable between an upper retracted position for storage and a lower deployed position for sleeping on. Upper-horizontal-surface **9** is shown in the lower deployed position for sleeping on. Preferably, upper-horizontal-surface **9** moves about axis **12.** Beneficially, axis **12** is either or between substantially parallel and substantially diagonal in relation to the longitudinal axis of passenger cabin generally designated **1** when viewed in plan view.

Similarly and usefully, upper-horizontal-surface **10** is movable between an upper retracted position for storage and a lower deployed position for sleeping on. Upper-horizontal-surface **10** is shown in the lower deployed position for sleeping on. Preferably, upper-horizontal-surface **10** moves about axis **13.** Beneficially, axis **13** is either or between substantially parallel and substantially diagonal in relation to the longitudinal axis of passenger cabin generally designated **1** when viewed in plan view.

Advantageously, upper-horizontal-surface **11** is fixed or detachably fixed or movably fixed to over-cab compartment floor **19.**

Conveniently, edge profile **14** of upper-horizontal-surface **9** is diagonally angled in relation to the longitudinal axis of passenger cabin generally designated **1,** when viewed in plan view. Consequently, and usefully, when upper-horizontal-surface **9** is moved upwardly about axis **12,** the diagonal angle of edge profile **14** will fit under or against the corresponding diagonal angle of inside sloping roof **27** of over-cab compartment **2.**

Similarly and conveniently, edge profile **15** of upper-horizontal-surface **10** is diagonally angled in relation to the longitudinal axis of motorised caravan **1,** when viewed in plan view. Consequently, and usefully, when upper-horizontal-surface **10** is moved upwardly about axis **13,** the diagonal angle of edge profile **15** will fit under or against the corresponding diagonal angle of inside sloping roof **27** of over-cab compartment **2.**

Usefully, the angle of edge profile **28** of upper-horizontal-surface **11** corresponds to the angle of edge profile **14** of deployed upper-horizontal-surface **9** so that there is a minimal gap between upper-horizontal-surface **9** and upper-horizontal-surface **11.**

Similarly and conveniently, the angle of edge profile **29** of upper-horizontal-surface **11** corresponds to the angle of edge profile **15** of deployed upper-horizontal-surface **10** so that there is a minimal gap between upper-horizontal-surface **10** and upper-horizontal-surface **11.**

Beneficially, upper-horizontal-surface **11** also provides storage space for access-ladder 7. Usefully, upper-horizontal-surface **11** comprises additional space upon which to sleep or sit. Typically, upper-horizontal-surface **11** comprises any or all furniture means, support means or storage means.

Usefully, as well as providing easier access between upper-horizontal surfaces **9, 10, 11** and step-landing-platform **52,** a sleeping profile that is either or between substantially parallel and substantially diagonal in relation to the longitudinal axis of passenger cabin generally designated **1** when viewed in plan view, with driver or passenger head toward the rear and driver or passenger feet toward the front, also provides aerodynamic benefits. Advantageously, interior wall surfaces **30** and **31** of over-cab compartment **2** are profiled so that they taper inwardly toward the front end of passenger cabin generally designated **1,** when viewed in plan view. Correspondingly, the exterior wall surfaces of over-cab compartment **2** are also profiled so that they taper inwardly toward the front end of passenger cabin generally designated **1** when viewed in plan view, thereby providing an aerodynamic profile.

Usefully, interior ceiling surface **27** of over cab compartment **2** tapers downwardly toward the front end of passenger cabin generally designated **1,** when viewed in side elevation view. Correspondingly, the exterior roof of over-cab compartment **2** is also profiled so that it tapers downwardly toward the front end of passenger cabin generally designated **1** when viewed in side elevation view, thereby providing an aerodynamic profile.

Conveniently, the innermost rear corner of upper-horizontal-surface **9** in a lower deployed position for sleeping on is at least partially supported by adjacent furniture means at position **32.** Similarly, and usefully, the innermost rear corner of upper-horizontal-surface **10** in a lower deployed position for sleeping on is at least partially support by adjacent furniture means at position **33.**

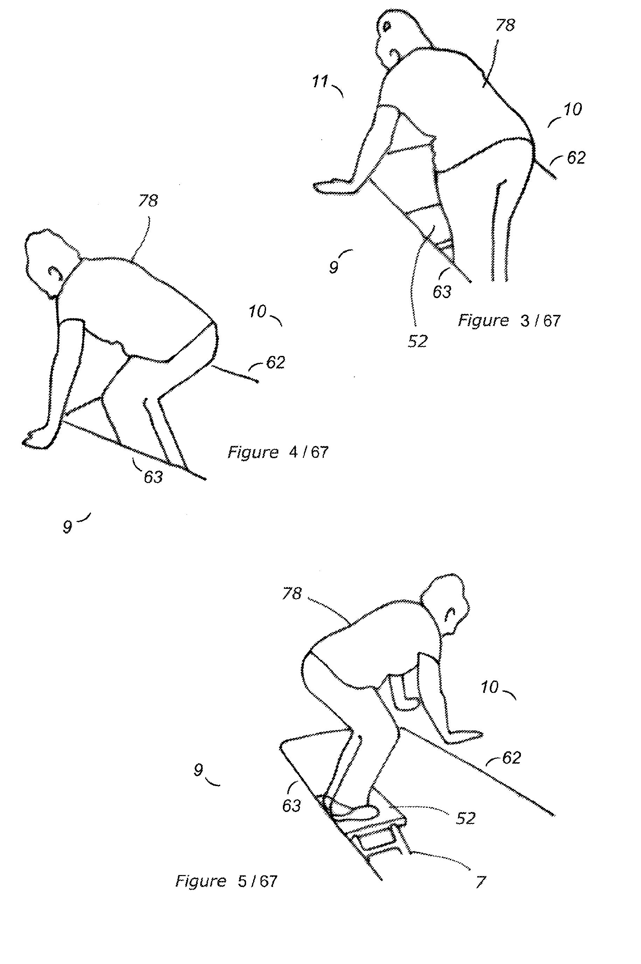

**Referring also to** **figures 3 through 8** of the accompanying drawings. Usefully, figures 3 through 8 illustrate the relative ease by which driver or passenger **78** moves between upper-horizontal-surface **9, 10, 11** and passenger cabin generally designated **1** (not shown), when compared with means of access provided in existing prior art. Figure 3 shows driver or passenger **78** ascending or descending access-ladder **7** (not shown) with their arms and hands extended to support themselves on support surface **62** of upper-horizontal-surface **10** and support surface **63** of upper-horizontal-surface **9.**

Figure 4 shows driver or passenger **78** standing on step-landing-platform **52** (not shown) with their arms and hands extended to support themselves on support surface **62** of upper-horizontal-surface **10** and support surface **63** of upper-horizontal-surface **9.**

Figure 5 shows driver or passenger **78** turning their feet and manoeuvring their body on step-landing-platform **52** to orientate and align themselves in preparation for moving between upper-horizontal-surface **9** and step-landing-platform **52.** Driver or passenger **78** has their arms and hands extended to support themselves on support surface **62** of upper-horizontal-surface **10.**

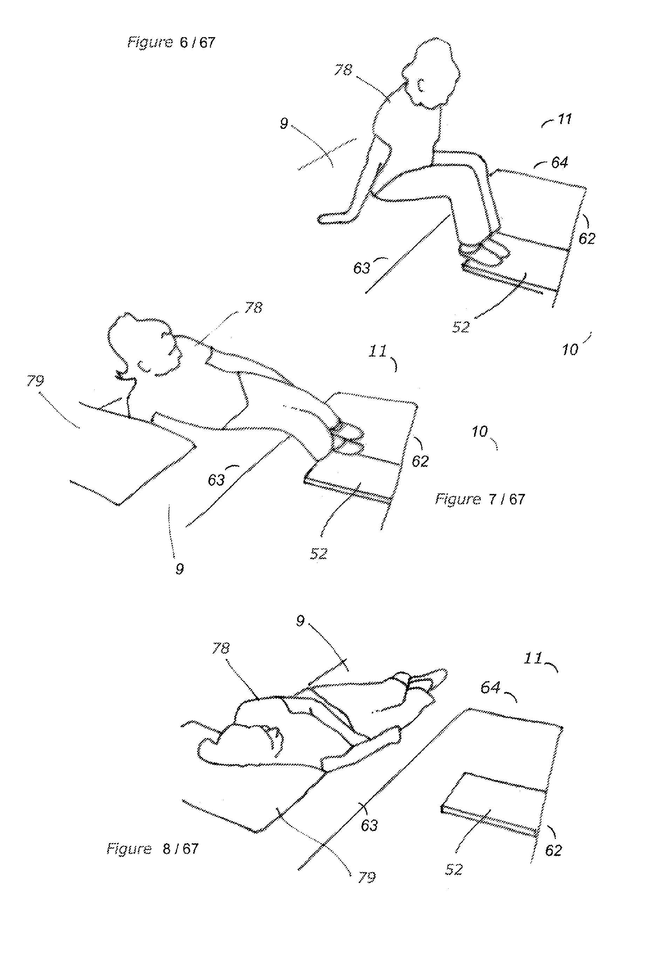

Figure 6 shows driver or passenger **78** moved to a sitting position on upper-horizontal-surface **9** with their arms and hands extended onto upper-horizontal-surface **9** to support themselves.

Figure 7 shows driver or passenger **78** moving between a sitting position and a reclining position on upper-horizontal-surface **9,** with their feet moving between step-landing-platform **52** and either or both upper-horizontal-surfaces **9** and **11.**

Figure 8 shows driver or passenger **78** in a reclined or sleeping position on upper-horizontal-surface **9** with their head substantially toward to rear and their feet substantially toward the front in relation to passenger cabin generally designated **1** and when viewed in plan view.

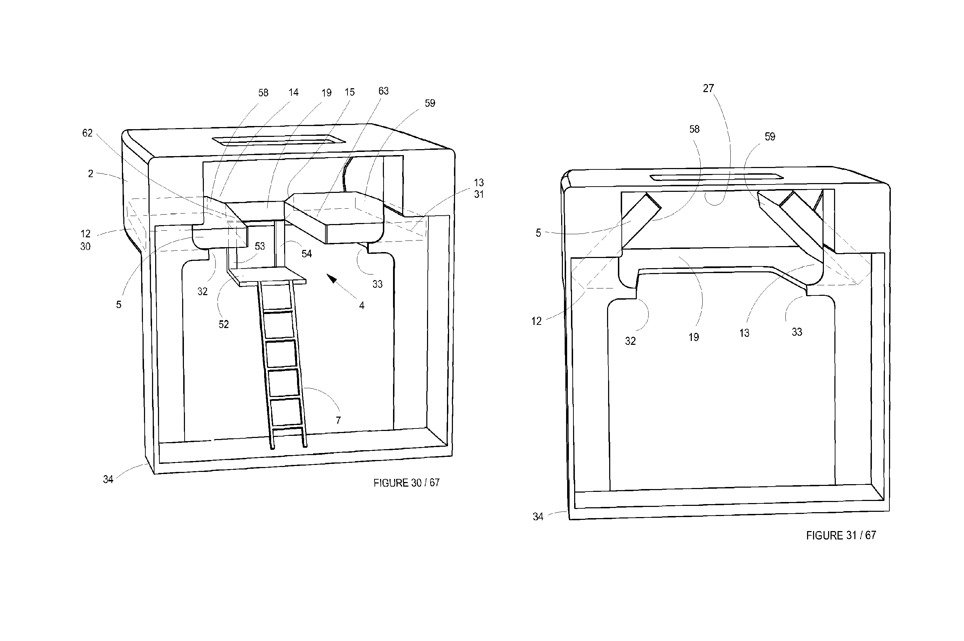

**Referring to** **figure 30 and figure 31** of the accompanying drawings. In a further embodiment of the present invention, two separate upper-horizontal-surfaces **58** and **59** are shown. Figure 30 shows upper-horizontal-surfaces **58** and **59** in a lower deployed position for sleeping on, resting on over-cab compartment floor **19.**

Figure **31** shows upper-horizontal-surfaces **58** and **59** in an upper retracted position for storage to facilitate access between cab area **35** (not shown) and main body **34.** Figure 30 shows step-landing-platform **52** and access-ladder **7** deployed within or adjacent access-recess **4** to facilitate access between horizontal surfaces **58, 59** and any or all step-landing-platform **52,** access-ladder **7,** main body **34** and cab area **35** (not shown).

Usefully, upper-horizontal-surface **58** moves about axis **12,** and upper-horizontal-surface **59** moves about axis **13.** Advantageously, the assembly comprising step-landing-platform **52** and step-landing-platform-support-members **53, 54** is detachably fixed on or adjacent over-cab compartment floor **19.** Usefully, access-ladder **7** is detachably fixed on or adjacent step-landing-platform **52.** In figure 30, step-landing-platform **52,** step-landing-platform-support-members **53, 54** and access-ladder **7** are show in a deployed position to facilitate movement between upper-horizontal-surfaces **58** and **59** and any or all step-landing-platform **52,** access-ladder **7,** main body **34** and cab area **35** (not shown). In figure 31**,** step-landing-platform **52,** step-landing-platform-support-members **53, 54** and access-ladder **7** are detached and removed to storage (not shown).

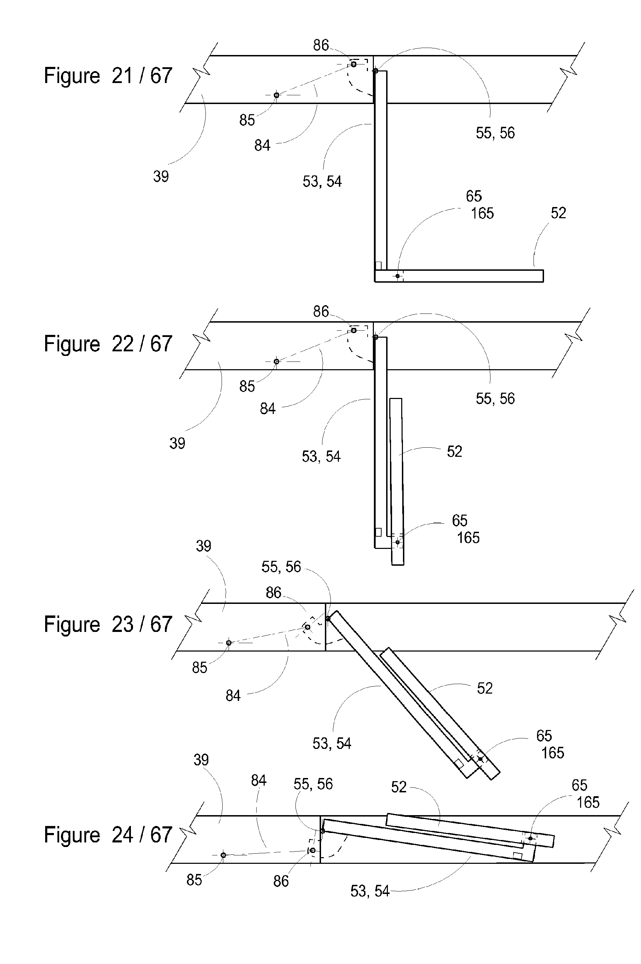

**Referring to** **figure 21** **through to** **figure 24** of the accompanying drawings. In a further embodiment of the present invention, figure 21 through to figure 24 show step-landing-platform **52** moving between a deployed position for standing on, and a retracted position for storage. Usefully, step-landing-platform **52** moves about axis means **65, 165** between a deployed position that is substantially parallel with upper-horizontal-surface **39** and a retracted position that is substantially perpendicular to upper-horizontal-surface **39** and adjacent step-landing-platform-support-members **53, 54.**
Conveniently, step-landing-platform-support-members **53, 54** move between a lower deployed support position and an upper retracted position for storage about axis means **55, 56.** Beneficially, a first fixed part of gas spring **84** is movably attached by means on upper-horizontal-surface **39** at position **85** and a second movable part of gas spring **84** is movably attached by means on step-landing-platform-support-members **53, 54** at position **86.**

Conveniently, as support members **53, 54** move between a retracted position for storage and a deployed support position, the direction of the linear force applied by gas spring **84** between position **85** and position **86** passes through an imaginary line drawn between axis means **55, 56** and position **85** when viewed in side elevation in relation to passenger cabin generally designated **1.**

Consequently, the force applied by gas spring **84** holds support members **53, 54** in both the upper retracted position for storage and the lower deployed support position.

Usefully, the fixed part of axis means **55, 56** is attached by means to upper-horizontal-surface **39.** Advantageously, the moving part of axis means **55, 56** is attached by means to step-landing-platform-support-members **53, 54.**

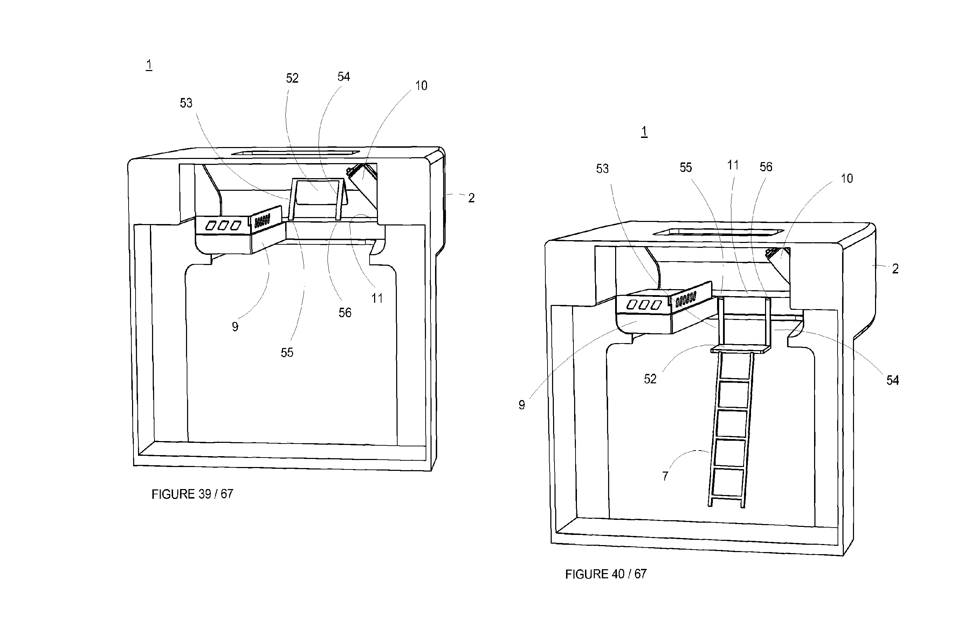

**Referring to** **figure 39 and figure 40** of the accompanying drawings. In a further embodiment of the present invention, figure 39 and figure 40 show a step-landing-platform **52** fixed by means to step-landing-platform-support-members **53, 54.** Conveniently, step-landing-platform-support-members **53, 54** are movably attached by axis means **55, 56** to upper-horizontal-surface **11.** Advantageously, assembly comprising step-landing-support-members **53, 54** and step-landing-platform **52** move between an upper retracted position for storage, and a lower deployed position for standing on, about axis means **55, 56.**

Usefully, the fixed part of axis means **55, 56** is attached by means to upper-horizontal-surface **11.** Advantageously, the moving part of axis means **55, 56** is attached by means to step-landing-platform-support-members **53, 54.**

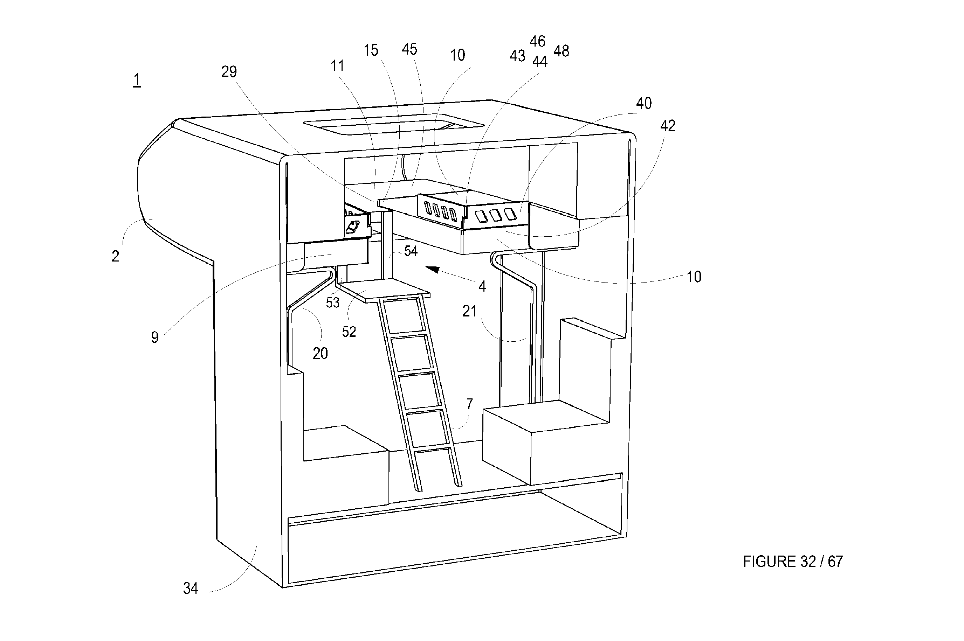

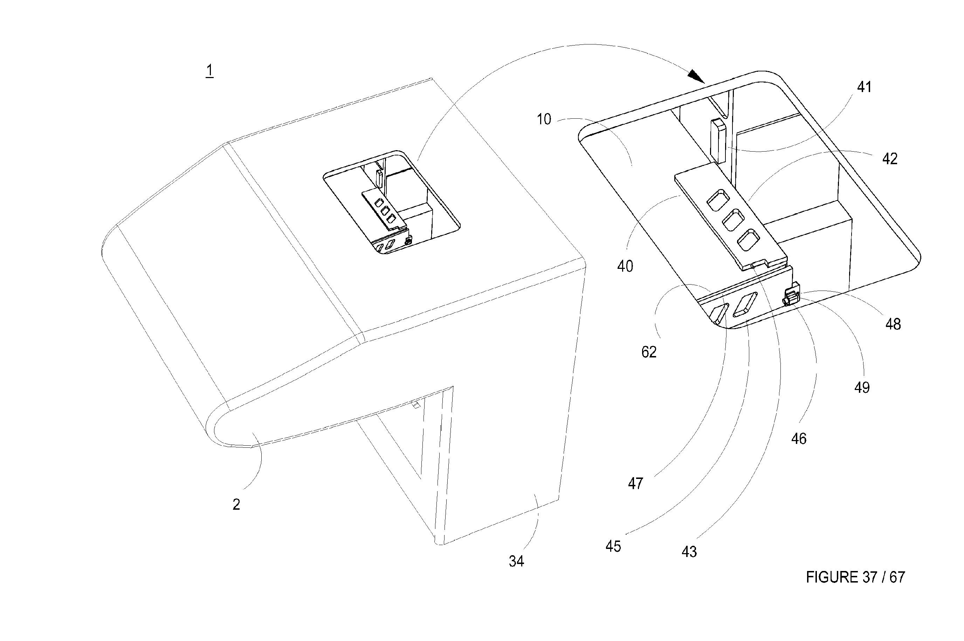

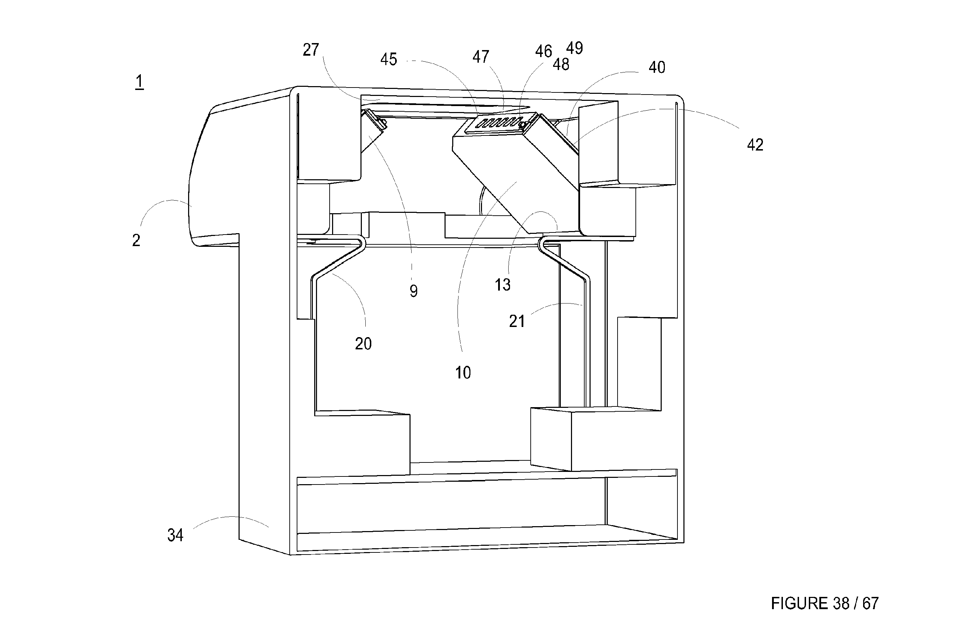

**Referring to** **figure 32** **through to** **figure 38** of the accompanying drawings. In a further embodiment of the present invention, axis **13** about which upper-horizontal-surface **10** moves is either or between substantially parallel and substantially diagonal in relation to the longitudinal axis of passenger cabin generally designated **1** when viewed in plan view. Barrier member **40** moves about axis means **42** between an upper deployed position for providing barrier means and a lower retracted position for storage. The detail view in Figure 37 shows barrier member **40** in a lower retracted position for storage. Usefully, and referring to figures 37 and 38, when barrier member **40** is in a lower retracted position for storage, upper-horizontal-surface **10** can move about axis **13.**

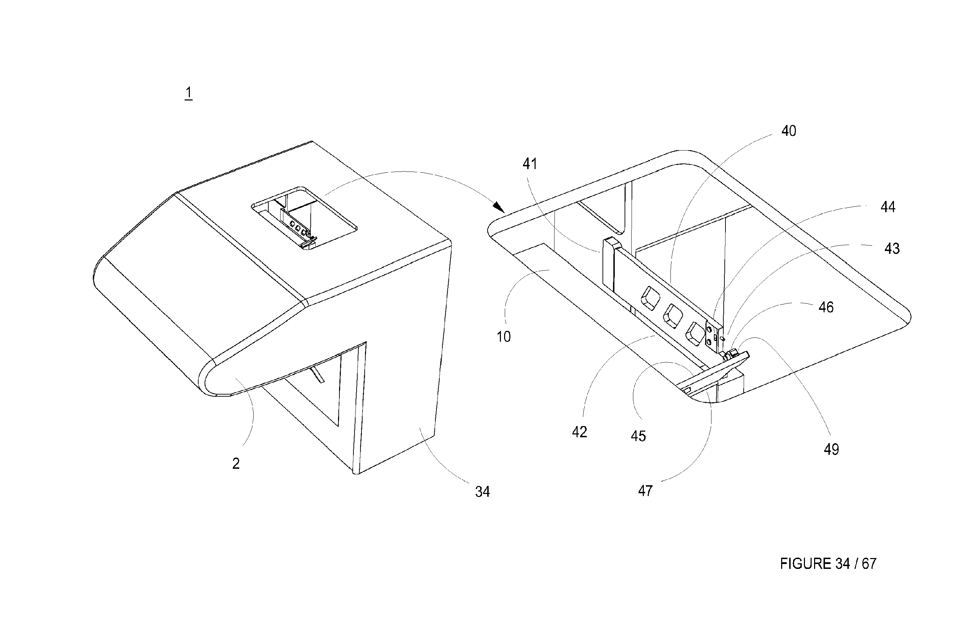

Conveniently, and referring to figure 34, when barrier member **40** is in an upper deployed position for providing barrier means and adjacent stop means **41,** upper-horizontal-surface **10** cannot move about axis **13.** This interlocking safety feature prevents upper-horizontal-surface **10** from moving from a lower deployed position for sleeping on to an upper retracted position for storage when barrier member **40** is in a deployed upper position for providing barrier means, thereby avoiding the possibility of barrier member **40** colliding with over-cab compartment inner ceiling **27.**

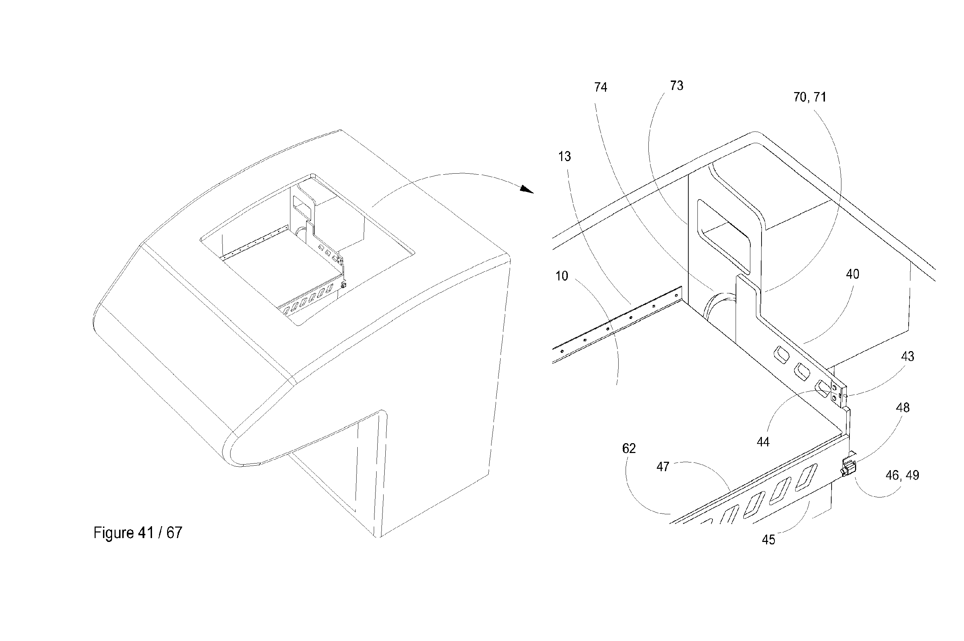

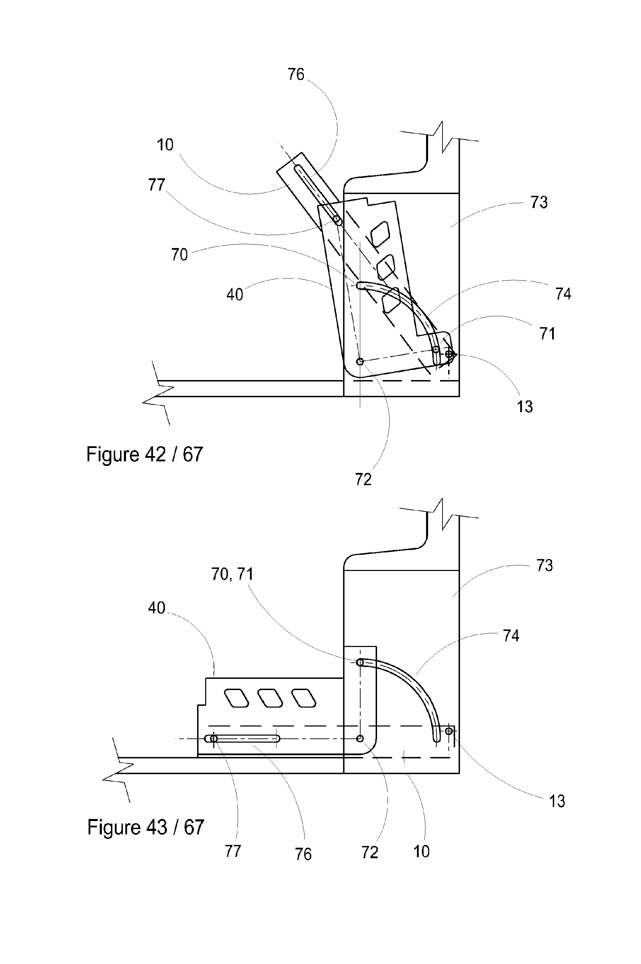

**Referring to** **figure 41** **through to** **figure 43** of the accompanying drawings. In a further embodiment of the present invention, axis **13** about which upper-horizontal-surface **10** moves is either or between substantially parallel and substantially diagonal in relation to the longitudinal axis of passenger cabin generally designated **1** when viewed in plan view. Barrier member **40** moves about axis means **72** between an upper retracted position for storage and a lower deployed position for providing barrier means. Advantageously, first connecting means **77** is fixed by means to barrier member **40.** Usefully, first slide means **76** is fixed by means to upper-horizontal-surface **10.** Alternatively, first slide means **76** is an integral slide means in upper-horizontal-surface **10.** Conveniently, barrier member **40** is mechanically linked to upper-horizontal-surface **10** via first connecting means **77** and first slide means **76.** Usefully, first connecting means **77** is movably attached to first slide means **76.** Consequently, as upper-horizontal-surface **10** moves between an upper stored position to facilitate access between cab area **35** (not shown) and main body **34,** and a lower deployed position for sleeping on, so barrier member **40** moves between an upper retracted position for storage and a lower deployed position for providing barrier means.

Usefully, second connecting member **71** is fixed by means to barrier member **40.** Conveniently, second slide means **74** is attached by means to support panel **73.** Alternatively, second slide means **74** is an integral slide means in support panel **73.** Advantageously, second connecting member **71** is movably attached to second slide means **74.** Beneficially, the position of end stop **70** is such that when upper-horizontal-surface **10** has moved from an upper stored position to facilitate access between cab area **35** (not shown) and main body **34,** to a lower deployed position for sleeping on, then second connecting means **74** is positioned adjacent end stop **70.** Consequently, upper-horizontal-surface **10** in a lower deployed position for sleeping on is at least partly supported by end stop **70** in support panel **73.**

**Referring to** **figure 44** **through to** **figure 48** of the accompanying drawings. In a further embodiment of the present invention, step-landing-platform **52** is usefully fixed by means to upper-horizontal-surface **3.** Beneficially, access-ladder **7** is detachably fixed by means to the side of step-landing-platform **52.** Advantageously, upper-horizontal-surface **3** provides either or both banister support means and surface support means to facilitate access between upper-horizontal-surface **3** and any or all step-landing-platform **52,** access-ladder **7,** and passenger cabin generally designated **1** (not shown). Conveniently, either or both foot step means or handrail means **8** provides support means when moving between upper-horizontal-surface **3** and any or all step-landing-platform **52,** access-ladder **7,** and passenger cabin generally designated **1** (not shown). Advantageously, and referring to figure 45 through to figure 48, access ladder **7** is moved to a stored position (not shown). Usefully, step-landing-platform **52** moves in the direction of arrow 'A' about axis means **65, 165** between an upper retracted position for storage and a lower deployed position for standing on. Beneficially, step-landing-platform-support-members **53, 54** move in the direction of arrow 'B' about axis means **55, 56** between an upper retracted position for storage and a lower deployed support position. Figure 48 shows upper-horizontal-surface **3** moving in the direction of arrow 'C', about axis 'D', from a lower deployed position for sleeping on to an upper retracted position for storage.

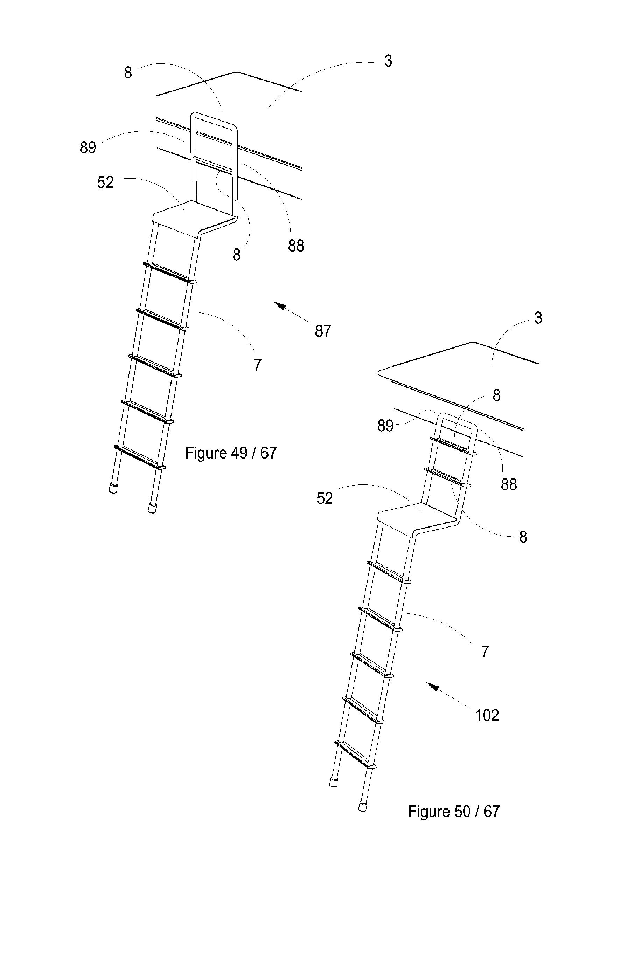

**Referring to** **figure 49** **and to** **figure 50** of the accompanying drawings. In a further embodiment of the present invention, figure 49 usefully shows access-ladder **7,** step-landing-platform **52** and either or both foot-step means and hand-rail means **8,** all of which are integrated to form integrated-access-means generally designated **87.** Typically figure 50 beneficially shows access-ladder **7,** step-landing-platform **52** and either or both foot-step means and hand-rail means **8,** all of which are integrated to form integrated-access-means generally designated **102.**

Advantageously, either integrated-access-means generally designated **87,** or integrated-access-means generally designated **102** can be fitted to new or retro-fitted to existing passenger cabins, generally designated **1** (not shown). Conveniently, either integrated-access-means generally designated **87** or integrated-access-means generally designated **102** are any or all fixed, movably fixed or detachably fixed to upper-horizontal-surface **3** by means, at positions **88** and **89** as shown in figures 49 and 50.

Advantageously, integrated-access-means generally designated **87** and integrated-access-means generally designated **102** move between a first stored position (not shown) to facilitate passenger movement within passenger cabin generally designated **1** (not shown) or facilitate access between cab area **35** (not shown) and main body **34** (not shown) and a second deployed position which facilitates access between upper-horizontal-surface **3** and passenger cabin generally designated **1** (not shown).

Conveniently, also shown is at least one, either or both, footstep means and handrail means **8** providing intermediate support means when moving between upper-horizontal-surface **3** and any or all step-landing-platform **52,** access-ladder **7,** and passenger cabin generally designated **1** (not shown).

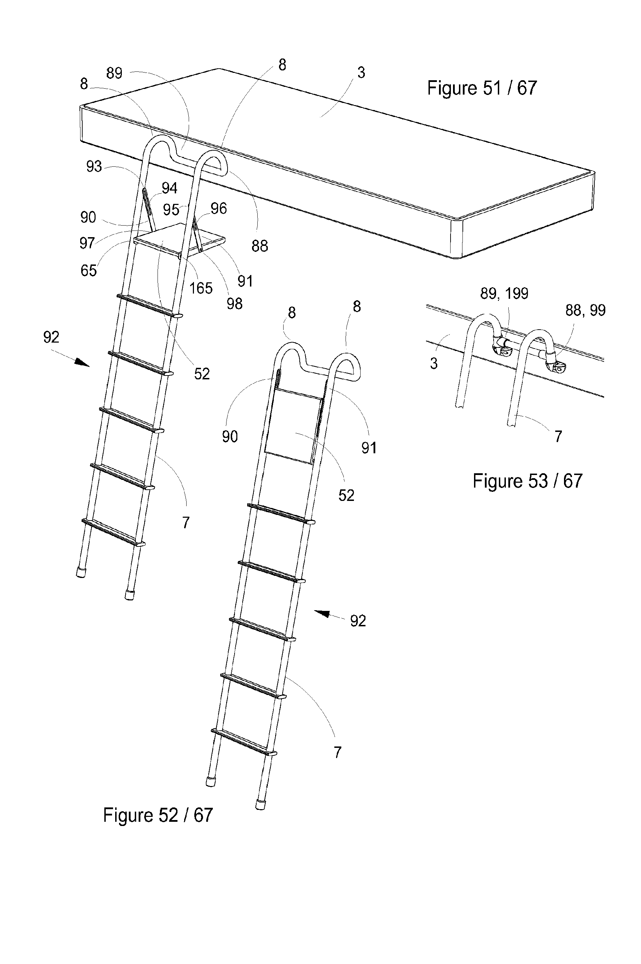

**Referring to** **figure 51** **through to** **figure 53** of the accompanying drawings. In a further embodiment of the present invention, access-ladder **7,** movable step-landing-platform **52** and either or both footstep means and handrail means **8,** are usefully integrated to form integrated-access-means generally designated **92** which can be fitted to new or retro-fitted to existing passenger cabins, generally designated **1** (not shown). Beneficially, integrated-access-means generally designated **92** is any or all fixed or movably fixed or detachably fixed to upper-horizontal-surface **3** by means at positions **88, 89.** Typically, a means by which integrated-access-means generally designated **92** is any or all fixed or movably fixed or detachably fixed to upper-horizontal-surface **3** comprises retaining elements **99, 199** at positions **88, 89,** see figure 53. Beneficially, retaining elements **99, 199** each comprise a hook and 'U' shaped socket assembly. Said hook is fixed by means to access-ladder **7,** and said 'U' shaped socket assembly is fixed by means to upper-horizontal-surface **3.**

Advantageously, integrated-access-means generally designated **92** moves between a first stored position (not shown) to either or both facilitate passenger movement within passenger cabin generally designated **1** or facilitate access between cab area **35** (not shown) and main body **34** (not shown) and a second deployed position for standing on which facilitates access between upper-horizontal-surface **3** and passenger cabin generally designated **1** (not shown).

Beneficially, and to facilitate storage in said first stored position, integrated-access-means generally designated **92** is reduced in size in at least one dimensional plane by moving step-landing-platform **52** from a second deployed position for standing on, as shown in figure 51, to a first retracted position for storage as shown in figure 52. Preferably, movable step-landing-platform **52** pivots about axis means **65, 165** between said first retracted position for storage and said second deployed position for standing on. Usefully, pivoting step-landing-platform **52** is supported in said second deployed position for standing on by step-landing-support-stays **90** and **91.**

Advantageously, step-landing-support-stays **90** and **91** are movable by means to facilitate the movement of pivoting step-landing-platform **52** between said first retracted position for storage and said second deployed position for standing on. Usefully, step-landing-support-stay means **90** and **91** are movable by any or all pivoting means, sliding means, folding means, and bending means.

Typically, one end of step-landing-support-stay means **90** is movably attached to pivoting step-landing-platform **52** at position **97,** and the opposite end of step-landing-support-stay means **90** comprises first sliding means **94** which is mechanically linked to access-ladder **7** via first connecting means **93.** Conveniently, one end of first connecting means **93** is fixed by means to access-ladder **7,** and the opposite end of first connecting means **93** is moveably attached to first sliding means **94.**

Conveniently, one end of step-landing-support-stay means **91** is movably attached to pivoting step-landing-platform **52** at position **98**, and the opposite end of step-landing-support-stay means **91** comprises second sliding means **96** which is mechanically linked to access-ladder **7** via second connecting means **95.** Beneficially, one end of first connecting means **95** is fixed by means to access-ladder **7**, and the opposite end of first connecting means **95** is moveably attached to second sliding means **96.**

Consequently, as pivoting step-landing-platform **52** moves about pivot axis **65**, **165** between a second deployed position for standing on and a first retracted position for storage, so first slide means **94** will move relative to first connecting means **93**, and second slide means **96** will move relative to second connecting means **95**.

Usefully, and to provide support for pivoting step-landing-platform **52** in a second deployed position for standing on, the end of first sliding means **94** that is furthest from position **97** will be adjacent and supported by first connecting means **93**, and the end of second sliding means **96** that is furthest from position **98** will be adjacent and supported by second connecting means **95**.

Conveniently, either or both footstep means and handrail means **8** provides intermediate support means for moving between pivoting step-landing-platform **52** and upper-horizontal-surface **3**, thereby facilitating access between upper-horizontal-surface **3** and any or all pivoting step-landing-platform **52**, access ladder **7,** and passenger cabin generally designate **1..**

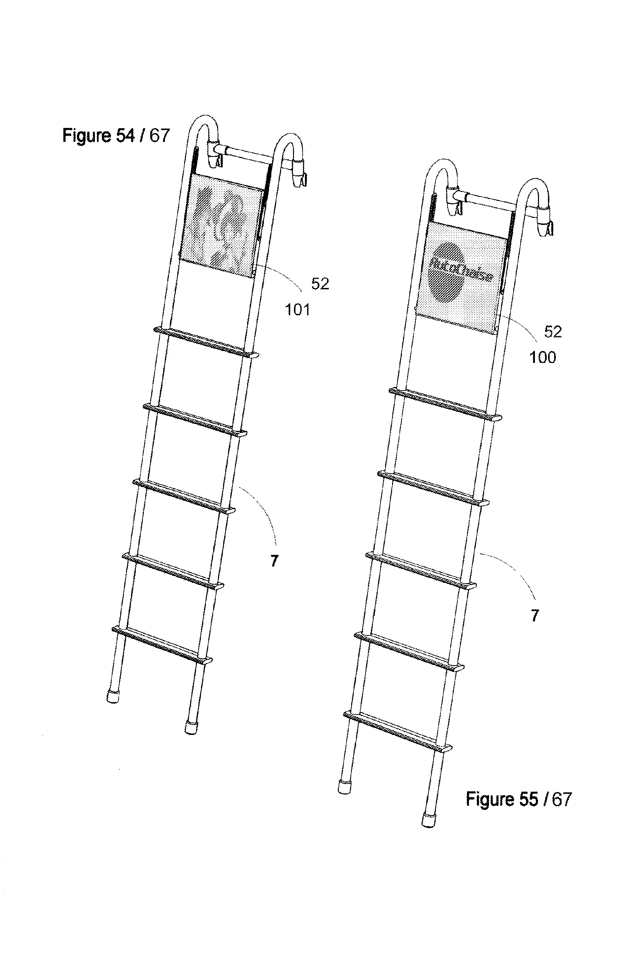

**Referring to** **figure 54 and figure 55** of the accompanying drawings. In a further embodiment of the present invention, pivoting step-landing-platform **52** is usefully provided with a non-slip surface **100** or alternatively, a non-slip surface **101**. Advantageously, non-slip surface **100** includes a printed or integral logo image. Beneficially, non-slip surface **101** includes a printed or integral picture image. Alternatively, either or both non-slip surface **100** and non-slip surface **101** include images of any design or type.

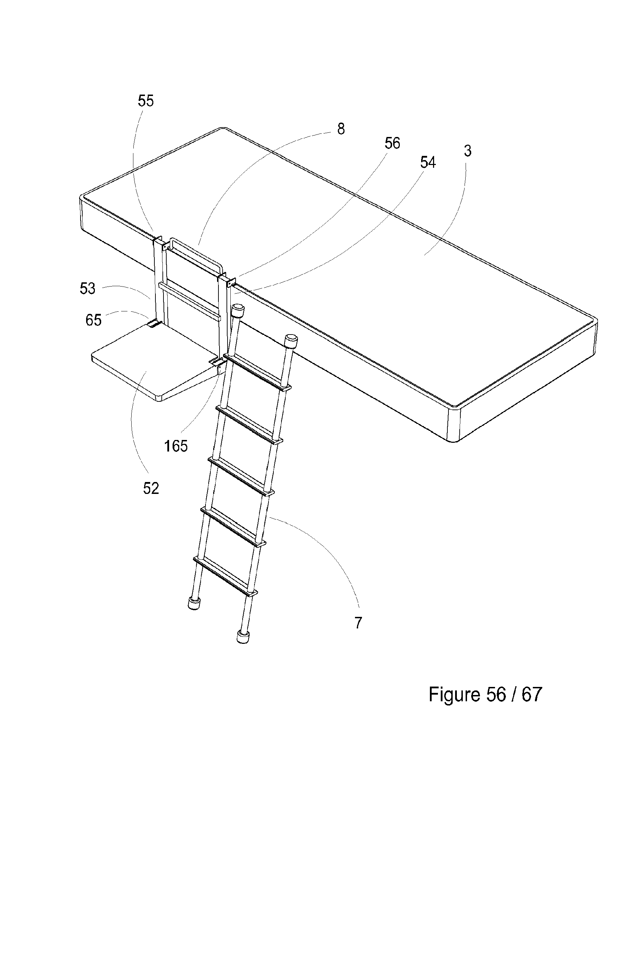

**Referring to** **figure 56** of the accompanying drawings. In a further embodiment of the present invention, access-ladder **7** is on upper-horizontal-surface **3** and adjacent step-landing-platform **52**. Usefully, access between passenger cabin generally designated **1** (not shown) and upper-horizontal-surface **3** is via access-ladder **7** and step-landing-platform **52.**

Advantageously, step-landing-platform **52** moves about lower axis means **65, 165** between an upper retracted position for storage and a lower deployed position for standing on. Figure **54** shows step-landing-platform **52** in a lower deployed position for standing on. Beneficially, step-landing support members **53, 54** move about upper axis means **55, 56** between an upper retracted position for storage and a lower deployed support position. Figure 54 shows step-landing support members **53, 54** in a lower deployed support position.

Conveniently, either or both footstep means and handrail means **8** facilitates access between upper-horizontal-surface **3** and any or all step-landing-platform **52,** access-ladder **7,** and passenger cabin generally designated **1** (not shown)

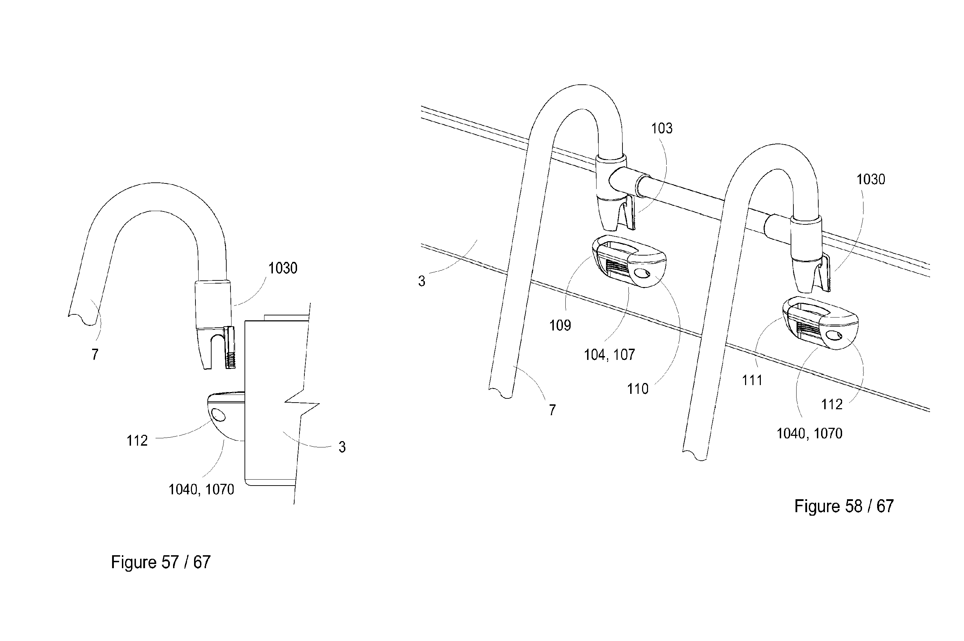

**Referring to** **figure 57 and figure 58** of the accompanying drawings. Usefully, hook **103, 1030** are shown fixed by means to access-ladder **7.** Advantageously, 'U' shaped bracket **107** is shown fixed by means via screw-bolt-hole bosses **109, 110** to upper-horizontal-surface **3.** Beneficially, 'U' shaped bracket **1070** is shown fixed by means via screw-bolt-hole bosses **111, 112.** Conveniently, resilient means **104** is contained within 'U' shaped bracket **107,** and resilient means **1040** is contained within 'U' shaped bracket **1070.**

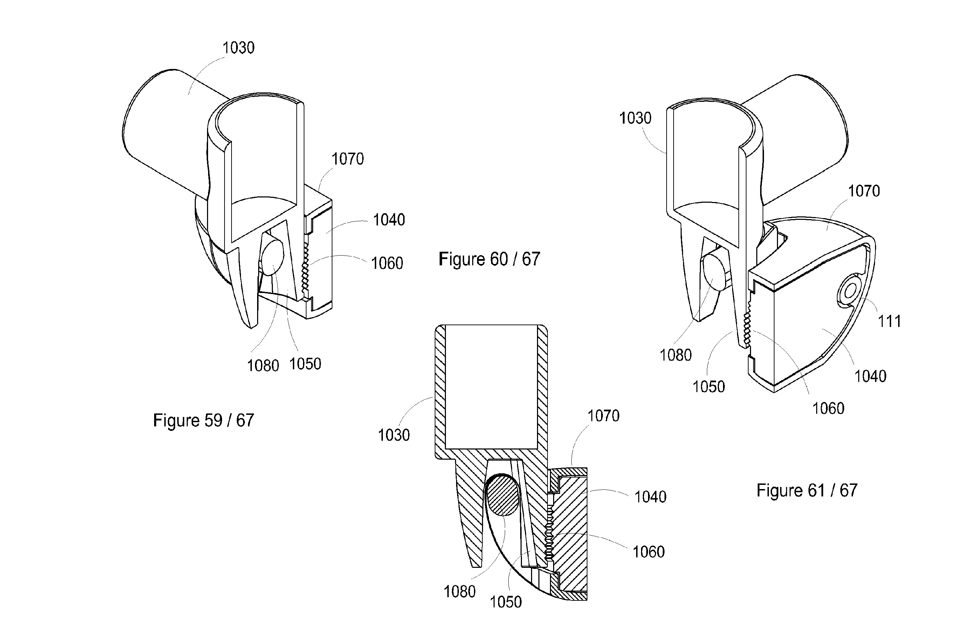

**Referring to** **figure 59** **through to** **figure 61** of the accompanying drawings. Usefully, access-ladder **7** is shown in the tilted forward insert position, where the feet of access ladder **7** are raise above the floor. Advantageously, hook **1030** is shown inserted into 'U' shaped bracket **1070** around 'U' shaped bracket integral support bar **1080,** so that the grooves in hook compression member **1050** align for meshing with the grooves in compression face **1060** of resilient means **1040,** when hook **1030** is rotated about 'U' shaped bracket integral support member **1080.** Beneficially, a similar relationship exists between hook **103,** 'U' shaped bracket **107,** resilient means **104,** 'U' shaped bracket integral support bar **108,** compression member **105,** and compression face **106,** (all not shown).

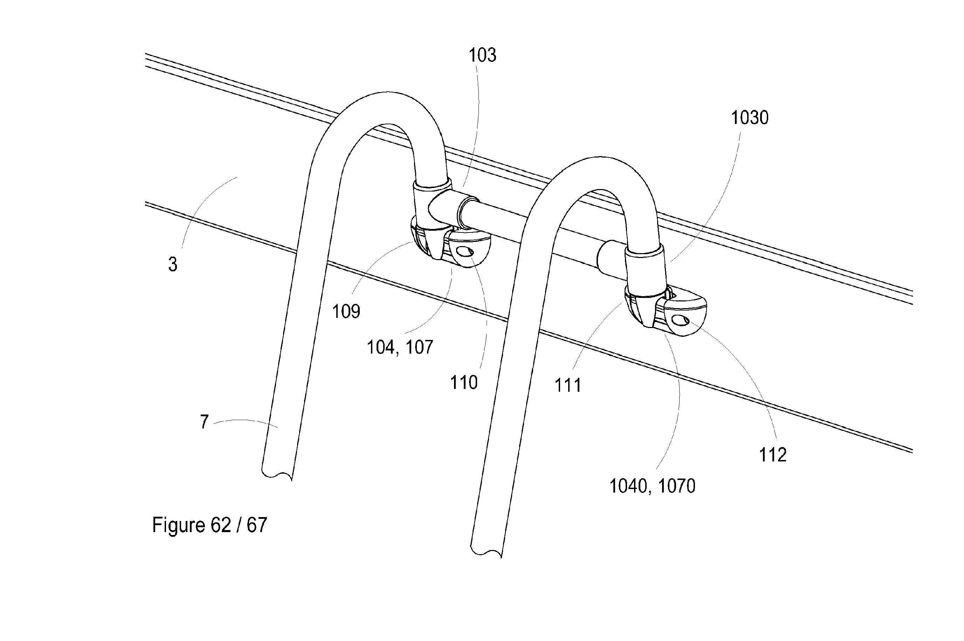

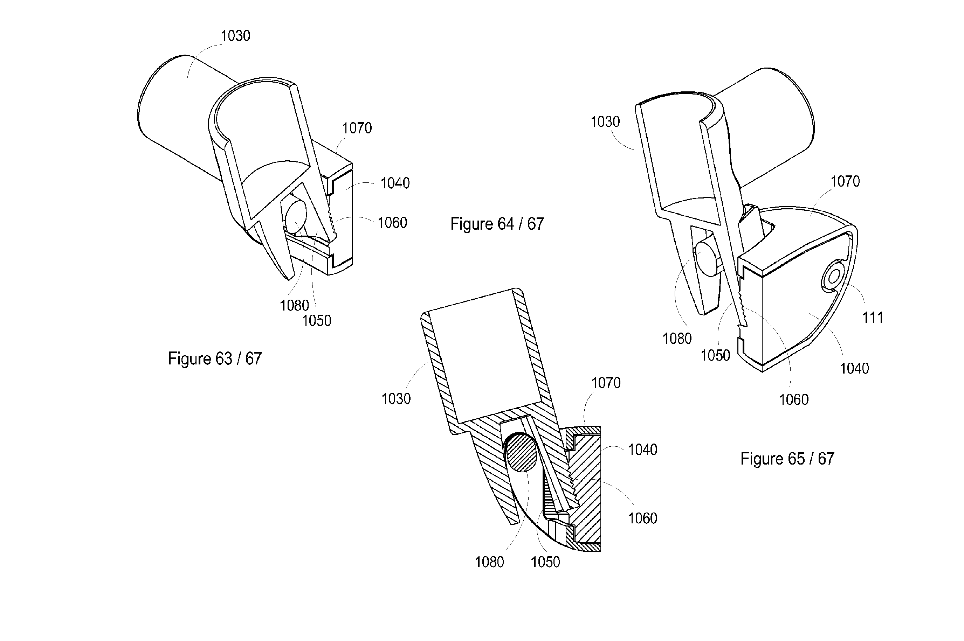

**Referring to** **figure 62** **through to** **figure 65** of the accompanying drawings. Conveniently, access-ladder **7** is shown in the tilted backward clamped position, where the feet of access-ladder **7** rest on the floor. Usefully, the grooves in compression member **1050** are meshed with the grooves in compression face **1060** of resilient means **1040.** Advantageously, spring bias applied by resilient means **1040** on hook **1030,** forces hook **1030** against 'U' shaped bracket integral support bar **1080,** thereby eliminating any dimensional tolerance between hook **1030** and 'U' shaped bracket **1070.** Access-ladder **7** is thereby firmly and detachably fixed to upper-horizontal-surface **3.** It will be readily appreciated, that the action of tilting access-ladder **7** backward, so that hook **1030** rotates about 'U' shaped bracket integral support bar **1080** to move the grooves in compression member **1050** to mesh with the grooves in compression face **1060** of resilient means **1040** must apply a force that is equal to or greater than the spring bias force applied by resilient means **1040** to compression member **1050** of hook **1030.** Advantageously, the torque generated by the mass of access-ladder **7** at its centre of gravity multiplied by the distance between 'U' shaped bracket integral support bar **1080** and said centre of gravity of access-ladder **7** is greater than the torque generated by the spring bias of resilient means **1040** multiplied by the distance between 'U' shaped bracket integral support bar **1080** and the point at which spring bias force is applied by resilient means **1040** to compression member **1050** of hook **1030.**

A similar relationship exists between compression member **105,** compression face **106,** resilient means **104,** hook **103,** 'U' shaped bracket integral support bar **108,** 'U' shaped bracket **107,** access-ladder 7, upper-horizontal-surface **3** (all not shown).

Resilient means **104, 1040** applies spring bias by all or any of, compression force, tension force and torsion force.

Usefully, access-ladder **7** is moved from the clamped position to the unclamped and insert position by raising the feet of access-ladder **7** from off the floor until the grooved face of compression member **105** is substantially parallel with the uncompressed grooved face of compression face **106,** and the grooved face of compression member **1050** is substantially parallel with the uncompressed grooved face of compression face **1060.**

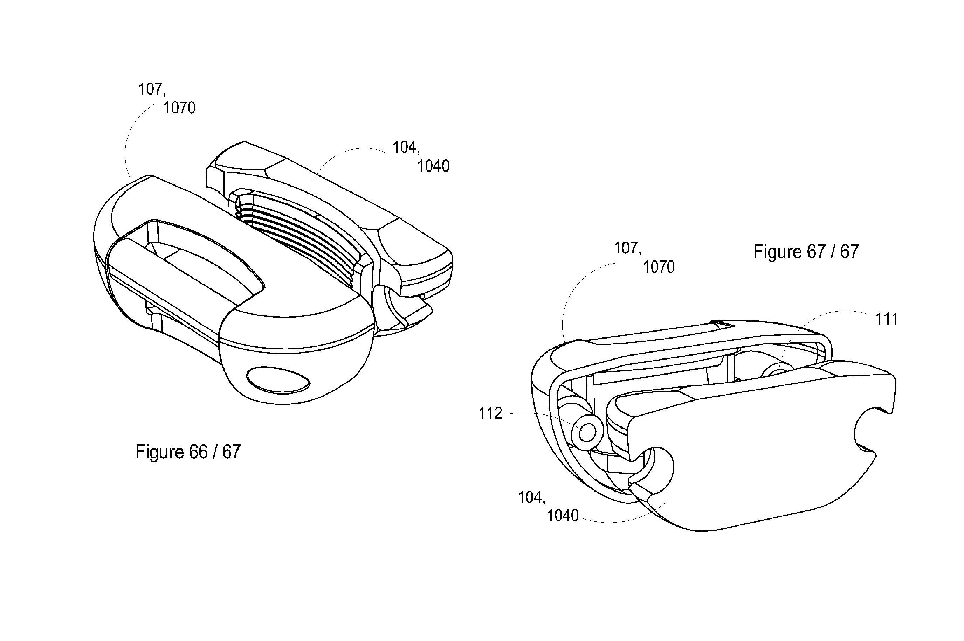

**Referring to** **figure 66 and figure 67** of the accompanying drawings. Conveniently, 'U' shaped bracket **107, 1070** and resilient means **104, 1040** are illustrated in exploded isometric view to show how, during production assembly, resilient means **104** nests inside 'U' shaped bracket **107** for use, and resilient means **1040** nests inside 'U' shaped bracket **1070** for use.

In this specification the words comprise or comprises are used to mean "consists of an or includes" and the word comprising is used to mean "consisting of or including".

In this specification the words upper and lower are defined in relation to passenger cabin generally designed **1** when viewed in side or end elevation views.

## Claims

1. An upper horizontal surface comprising an access-ladder with step-landing-platform, the upper horizontal surface defining at least one surface for use as any or all, a surface for sleeping on, a surface for laying on, a surface for sitting on, wherein at least part of either or both the access-ladder and the step-landing-platform is positioned on or adjacent the upper horizontal surface, and the step-landing platform facilitates access between the access-ladder and the upper horizontal surface.

2. An upper horizontal surface comprising an access-ladder with step-landing-platform as claimed in claim 1 wherein the upper horizontal surface is positioned within a passenger-space, the passenger space defining a motorised or towable passenger cabin, said passenger cabin comprising any of, a motorised caravan, a trailer, a trailer caravan, a fifth-wheel trailer, a fifth-wheel trailer caravan, a boat, a ship, a bus, a coach, an aircraft, a railway carriage.

3. An upper horizontal surface comprising an access-ladder with step-landing-platform as claimed in claim 1 and claim 2 wherein the step-landing-platform is any of, fixed by means, movably fixed by means, detachably fixed by means on or adjacent either or both the access-ladder and the upper-horizontal-surface.

4. An upper horizontal surface comprising an access-ladder with step-landing-platform as claimed in claim 1 through to claim 3 wherein the access-ladder is any of, fixed by means, movably fixed by means, detachably fixed by means on or adjacent either or both the step-landing-platform and the upper-horizontal-surface.

5. An upper horizontal surface comprising an access-ladder with step-landing-platform as claimed in claim 1 through to claim 4 wherein there is provided at least one access-recess either or both within and between all or any said upper-horizontal-surface, and at least part of either or both said access-ladder and said step-landing-platform is positioned on or adjacent said access-recess to facilitate access between any or all said upper-horizontal-surface, said step-landing-platform, and said access-ladder.

6. An upper horizontal surface comprising an access-ladder with step-landing-platform as claimed in claim 1 through to claim 5 wherein at least part of all or any said upper-horizontal-surface is movable between a retracted first position for storage and a deployed second position for said use.

7. An upper horizontal surface comprising an access-ladder with step-landing-platform as claimed in claim 1 through to claim 6 wherein either or both said step-landing-platform and said access-ladder is movable between a first retracted position for storage and a second deployed position for standing on which facilitates access between any or all said upper-horizontal-surface, said step-landing-platform and said access-ladder.

8. An upper horizontal surface comprising an access-ladder with step-landing-platform claimed in claims 1 through 7 wherein there is provided either or both footstep means and handrail means positioned between said upper-horizontal-surface and said step-landing-platform to facilitate access between any or all said upper-horizontal-surface, said step-landing-platform, and said access-ladder.

9. An upper horizontal surface comprising an access-ladder with step-landing-platform as claimed in claim 8 wherein there is a plurality of either or both said footstep means and said handrail means.

10. An upper horizontal surface comprising an access-ladder with step-landing-platform as claimed in claims 5 through 9 wherein there is provided either or both banister support means and surface support means adjacent either or both said step-landing-platform and said access-recess to facilitate access between any or all said upper-horizontal-surface, said step-landing-platform, and said access-ladder.

11. An upper horizontal surface comprising an access-ladder with step-landing-platform as claimed in claims 6 through to claim 10 wherein at least part of all or any said upper-horizontal-surface is movable about any of, a fixed axis means, a movable axis means, a detachable axis means between the retracted first position for storage and the deployed second position for use.

12. An upper horizontal surface comprising an access-ladder with step-landing-platform as claimed in claim 11 and the passenger cabin as claimed in claim 2 wherein any said upper horizontal surface axis means is either or between substantially parallel and substantially diagonal in relation to the longitudinal axis of said passenger cabin when viewed in plan view.

13. An upper horizontal surface comprising an access-ladder with step-landing-platform as claimed in claims 1 through 13 wherein the upper horizontal surface is provided with barrier safety arrangement means movable between a deployed first position which inhibits unintentional access between the upper-horizontal-surface and either or both said step-landing-platform or said access-ladder and a stored second position which facilitates access between any or all said upper-horizontal-surface, said step-landing-platform, and said access-ladder.

14. An upper horizontal surface comprising an access-ladder with step-landing-platform as claimed in claims 1 through 14 wherein the step-landing-platform comprises at least one platform of any size, shape, profile and area that will facilitate movement between said upper-horizontal-surface and said access-ladder.

15. An upper horizontal surface comprising an access-ladder with step-landing-platform as claimed in claims 1 through 16 wherein there is provided a retaining element which any of, fixes, movably fixes, or detachably fixes either or both the access-ladder and the step-landing-platform on or adjacent the upper-horizontal-surface, said retaining element including at least one resilient means, said resilient means applying spring bias by any of, compression means, tension means and torsion means to reduce or tend to reduce all or any, movement, wobble, vibration and dimensional tolerance between said upper-horizontal-surface, and either or both said step-landing-platform, said access-ladder.
